# EUROPEAN PATENT APPLICATION

(11) **EP 4 701 132 A1**
(43) Date of publication of application: **25.02.2026**
(21) Application number: 24806264.8
(22) Date of filing: 17.04.2024
(51) Int. Cl.: H04L 9/40

(54) **SOURCE ADDRESS VALIDATION TABLE ENTRY ACQUISITION METHOD AND APPARATUS**

(30) Priority: 18.05.2023 CN 202310568074
(71) Applicant: Huawei Technologies Co., Ltd., Shenzhen, Guangdong 518129 (CN)
(72) Inventor: ZHUANG, Shunwan, Shenzhen, Guangdong 518129 (CN); YANG, Pingan, Shenzhen, Guangdong 518129 (CN); GENG, Nan, Shenzhen, Guangdong 518129 (CN); WANG, Haibo, Shenzhen, Guangdong 518129 (CN); CHEN, Shuanglong, Shenzhen, Guangdong 518129 (CN); PANG, Donglei, Shenzhen, Guangdong 518129 (CN)
(74) Representative: Goddar, Heinz J.
(86) International application number: PCT/CN2024/088221
(87) International publication number: WO 2024/234907

(57) **Abstract**

This application discloses a method and an apparatus for obtaining a source address validation entry. The method includes: obtaining a first prefix of a second AS based on an identifier of a first AS and a first correspondence, where the first correspondence includes the identifier of the first AS, an identifier of the second AS, and a first valid relationship, and the second AS is located downstream of the first AS; and obtaining the source address validation entry based on an interface communicating with the first AS and the first prefix, where the source address validation entry includes the first prefix and an identifier of the interface. The prefix is obtained by using the valid relationship between the ASs, so that an error caused by an invalid relationship between the ASs to the prefix obtaining process is reduced, thereby improving accuracy of the prefix, and further improving accuracy of the source address validation entry obtained based on the prefix.

## Description

This application claims priority to Chinese Patent Application No. 2023105680744, filed with the China National Intellectual Property Administration on May 18, 2023 and entitled "METHOD AND APPARATUS FOR OBTAINING SOURCE ADDRESS VALIDATION ENTRY", which is incorporated herein by reference in its entirety.

### TECHNICAL FIELD

This application relates to the communication field, and specifically, to a method and an apparatus for obtaining a source address validation entry.

### BACKGROUND

Source address validation (source address validation, SAV) is an important method to defend against source address forgery attacks. Many defense schemes, such as unicast reverse path forwarding (unicast reverse path forwarding, uRPF), are implemented based on source address validation. In a source address validation process, a network device validates authenticity of a source internet protocol (internet protocol, IP) address of a received packet based on a source address validation entry. If the packet does not match the source address validation entry, the network device drops the received packet. This reduces a probability that the attack traffic is further forwarded to the network through the network device, helps block the attack traffic, and improves network security. Currently, the source address validation entry is not accurate enough, which leads to a high probability of an error occurring in the source address validation process.

### SUMMARY

This application provides a method and an apparatus for obtaining a source address validation entry, to help improve accuracy of the source address validation entry. Technical solutions are described as follows.

According to a first aspect, a method for obtaining a source address validation entry is provided. The method includes: obtaining a first prefix of a second AS based on an identifier of a first AS and a first correspondence, where the first correspondence includes the identifier of the first AS, an identifier of the second AS, and a first valid relationship, and the second AS is located downstream of the first AS; and obtaining the source address validation entry based on an interface communicating with the first AS and the first prefix, where the source address validation entry includes the first prefix and an identifier of the interface. According to the method provided in the first aspect, the prefix is obtained by using the valid relationship between the ASs, so that an error caused by an invalid relationship between the ASs to the prefix obtaining process is reduced, thereby improving accuracy of the prefix, and further improving accuracy of the source address validation entry obtained based on the prefix.

In a possible implementation, the first valid relationship is that a region corresponding to a relationship between two ASs that are upstream and downstream to each other matches a region corresponding to a customer cone, and the customer cone includes the two ASs that are upstream and downstream to each other. In the foregoing manner, validity of the relationship between the ASs can be validated based on whether the regions match.

In a possible implementation, before obtaining the first prefix of the second AS based on the identifier of the first AS and the first correspondence, the method further includes: determining, based on matching between a region corresponding to the first AS and a valid region corresponding to a relationship between the first AS and the second AS, that the first AS and the second AS have the first valid relationship. In the foregoing implementation, validity of the relationship between the ASs is determined based on a matching feature of the regions, and the prefix is obtained by using the ASs with matching regions, so that an error caused to the prefix obtaining process by an AS whose region does not meet a requirement is eliminated as much as possible, and it is avoided that a prefix of the AS without the matching region is incorrectly classified into a prefix set, thereby improving accuracy of the prefix, and further improving accuracy of the source address validation entry obtained based on the prefix.

In a possible implementation, the first valid relationship is a relationship between ASs on which validation performed based on a plurality of databases succeeds, and the plurality of databases are different in at least one of the following: a registration quantity, deployment time, a digital signature, and certificate authentication. In the foregoing manner, the validity of the relationship between the ASs can be validated in combination with the plurality of databases, thereby further improving reliability of utilization in the process of obtaining the source address validation entry.

In a possible implementation, before obtaining the first prefix of the second AS based on the identifier of the first AS and the first correspondence, the method further includes: determining, based on matching between a second correspondence and a third correspondence, that the first AS and the second AS have the first valid relationship, where the second correspondence includes the identifier of the first AS, the identifier of the second AS, and a relationship between the first AS and the second AS, and the third correspondence includes the identifier of the first AS, the identifier of the second AS, and a relationship between the first AS and the second AS. In the foregoing implementation, validity of the relationship between the ASs is validated based on a plurality of databases, and the prefix is obtained by using the ASs validated by the plurality of databases, so that an error caused by an AS that does not match a region to a prefix obtaining process as much as possible, thereby improving accuracy of the prefix, and further improving accuracy of a source address validation entry obtained based on the prefix.

In a possible implementation, the second correspondence is obtained by searching an autonomous system provider authorization ASPA database for a downstream AS based on the identifier of the first AS, and the third correspondence is obtained by searching an internet routing registry IRR database for a downstream AS based on the identifier of the first AS; or the second correspondence is obtained by searching an autonomous system provider authorization ASPA database for an upstream AS based on the identifier of the second AS, and the third correspondence is obtained by searching an internet routing registry IRR database for an upstream AS based on the identifier of the second AS.

In a possible implementation, obtaining the first prefix of the second AS based on the identifier of the first AS and the first correspondence includes: obtaining the identifier of the second AS based on the identifier of the first AS and the first correspondence; and obtaining the first prefix based on the identifier of the second AS and a fourth correspondence, where the fourth correspondence includes the identifier of the second AS, the first prefix, and a second valid relationship. In the foregoing manner, the prefix is obtained by using the valid relationship between the AS and the prefix, so that an error caused by an invalid relationship between the AS and the prefix to the prefix obtaining process is reduced, thereby improving accuracy of the prefix, and further improving accuracy of the source address validation entry obtained based on the prefix.

In a possible implementation, the second valid relationship is that a region corresponding to a relationship between a prefix and an AS to which the prefix belongs matches a region corresponding to a customer cone, and the customer cone includes the AS to which the prefix belongs. In the foregoing implementation, validity of the relationship between the AS and the prefix is determined based on a matching feature of the regions, so that an error caused to the prefix obtaining process by a prefix whose region does not meet a requirement is eliminated as much as possible, and it is avoided that the prefix whose region does not meet the requirement is incorrectly classified into a prefix set, thereby improving accuracy of the prefix, and further improving accuracy of the source address validation entry obtained based on the prefix.

In a possible implementation, before obtaining the first prefix based on the identifier of the second AS and the fourth correspondence, the method further includes: determining, based on matching between a region corresponding to the second AS and a valid region corresponding to a relationship between the second AS and the first prefix, that the second AS and the first prefix have the second valid relationship.

In a possible implementation, the second valid relationship is a relationship between ASs on which validation performed based on a plurality of databases succeeds, and the plurality of databases are different in at least one of the following: a registration quantity, deployment time, a digital signature, and certificate authentication. In the foregoing manner, validity of the relationship between the AS and the prefix can be validated based on whether validation of all the plurality of databases succeeds.

In a possible implementation, before obtaining the first prefix based on the identifier of the second AS and the fourth correspondence, the method further includes: determining, based on matching between a fifth correspondence and a sixth correspondence, that the second AS and the first prefix have the second valid relationship, where the fifth correspondence includes the identifier of the second AS, the first prefix, and a relationship between the second AS and the first prefix, and the sixth correspondence includes the identifier of the second AS, the first prefix, and a relationship between the second AS and the first prefix. In the foregoing implementation, validity of the relationship between the AS and the prefix is validated based on a plurality of databases, thereby improving accuracy of the prefix, and further improving accuracy of the source address validation entry obtained based on the prefix.

In a possible implementation, the fifth correspondence is obtained by searching an ROA database for a prefix based on the identifier of the second AS, and the sixth correspondence is obtained by searching an IRR database for a prefix based on the identifier of the second AS; or the fifth correspondence is obtained by searching an ROA database for a belonging AS based on the first prefix, and the sixth correspondence is obtained by searching an IRR database for a belonging AS based on the first prefix.

In a possible implementation, the first correspondence includes a customer cone of the first AS, and the customer cone of the first AS includes the first AS and the second AS.

In a possible implementation, the method is performed by a network device, the network device includes the interface, the network device is located at an edge of a third AS, and the third AS is located upstream of the first AS.

In a possible implementation, the method is performed by a control device, and after obtaining the source address validation entry based on the interface communicating with the first AS and the first prefix, the method further includes: sending, by the control device, a protocol packet to a network device, where the network device includes the interface, the network device is located at an edge of a third AS, the third AS is located upstream of the first AS, and the protocol packet includes the source address validation entry. In the foregoing implementation, the control device is supported to automatically deliver the source address validation entry to the network device.

In a possible implementation, the protocol packet is a border gateway protocol BGP packet or a path computation element protocol PCEP packet.

In a possible implementation, the protocol packet is a border gateway protocol flow specification BGP FS packet, the BGP FS packet includes a network layer reachability information NLRI field and an extended community attribute field, the NLRI field includes the first prefix, and the extended community attribute field includes the identifier of the interface.

According to a second aspect, an apparatus for obtaining a source address validation entry is provided. The apparatus for obtaining the source address validation entry has a function of implementing any one of the first aspect or the optional implementations of the first aspect. The apparatus for obtaining the source address validation entry includes at least one unit, and the at least one unit is configured to implement the method provided in any one of the first aspect or the optional implementations of the first aspect. In some implementations, a unit in the apparatus for obtaining the source address validation entry is implemented by using software, and the unit in the apparatus for obtaining the source address validation entry is a program module. In some other embodiments, a unit in the apparatus for obtaining the source address validation entry is implemented by hardware or firmware. For specific details of the apparatus for obtaining the source address validation entry provided in the second aspect, refer to any one of the first aspect or the optional implementations of the first aspect. Details are not described herein again.

According to a third aspect, a network device is provided. The network device includes a processor and a network interface. The processor is configured to execute instructions, so that the network device is enabled to perform the method according to any one of the first aspect or the optional implementations of the first aspect. The network interface is configured to send or receive a packet. For specific details of the network device provided in the third aspect, refer to any one of the first aspect or the optional implementations of the first aspect. Details are not described herein again.

According to a fourth aspect, a computer-readable storage medium is provided. The storage medium stores at least one instruction. When the instruction is run on a computer, the computer is enabled to perform the method provided in any one of the first aspect or the optional implementations of the first aspect.

According to a fifth aspect, a computer program product is provided. The computer program product includes one or more computer program instructions. When the computer program instructions are loaded and run by a computer, the computer is enabled to perform the method according to any one of the first aspect or the optional implementations of the first aspect.

According to a sixth aspect, a chip is provided. The chip includes a memory and a processor. The memory is configured to store computer instructions. The processor is configured to invoke the computer instructions from the memory and run the computer instructions, to perform the method according to any one of the first aspect and the possible implementations of the first aspect.

### BRIEF DESCRIPTION OF DRAWINGS

FIG. 1 is a diagram of an application scenario according to an embodiment of this application;
FIG. 2 is a diagram of a source address validation scenario according to an embodiment of this application;
FIG. 3 is a flowchart of a BAR-SAV method according to an embodiment of this application;
FIG. 4 is a flowchart of another BAR-SAV method according to an embodiment of this application;
FIG. 5 is a flowchart of another BAR-SAV method according to an embodiment of this application;
FIG. 6 is a diagram of a TLV format according to an embodiment of this application;
FIG. 7 is a diagram of another TLV format according to an embodiment of this application;
FIG. 8 is a diagram of another TLV format according to an embodiment of this application;
FIG. 9 is a diagram of another TLV format according to an embodiment of this application;
FIG. 10 is a diagram of a format of an NLRI field according to an embodiment of this application;
FIG. 11 is a diagram of a format of an NLRI field according to an embodiment of this application;
FIG. 12 is a diagram of a format of an extended community attribute field according to an embodiment of this application;
FIG. 13 is a flowchart of a method for obtaining a source address validation entry according to an embodiment of this application;
FIG. 14 is a diagram of a structure of an apparatus for obtaining a source address validation entry according to an embodiment of this application; and
FIG. 15 is a diagram of a structure of a device according to an embodiment of this application.

### DESCRIPTION OF EMBODIMENTS

To make the foregoing objectives, features, and advantages of this application clearer and more comprehensible, the following describes embodiments of this application in more detail with reference to the accompanying drawings and specific implementations.

The following explains and describes some terms and concepts in embodiments of this application.

Source address forgery attack: An attacker pretends to be a legitimate network device and sends packets with forged addresses in a source address field. In this way, the attacker hides an identity and deceives other network devices to perform malicious operations.

Prefix (prefix): The prefix may also be referred to as a network prefix, a network segment, or an IP address segment. The prefix is a part of an IP address. The prefix indicates a network to which the IP address belongs. The prefix includes an internet protocol version 4 (internet protocol version 4, IPv4) prefix and an internet protocol version 6 (internet protocol version 6, IPv6) prefix. For example, an IPv4 address is 192.168.1.50, a subnet mask is 255.255.255.0 (a length of a prefix is 24 bits), a prefix of the IPv4 address is 192.168.1.0, and a host number is 50. That is, the IPv4 address belongs to a network 192.168.1.0, and the host number of a host to which the IPv4 address belongs in the network 192.168.1.0 is 50. For brevity, in embodiments of this application, a specific prefix is subsequently represented in a simplified manner in a form of "P + number". P represents a prefix. For example, a prefix is represented as a P5 in a simplified manner.

An autonomous system (autonomous system, AS): The autonomous system is a group of network devices that have a same routing policy. These network devices are managed by a same entity. Each AS is allocated an AS number (autonomous system number) on the Internet, so that other network devices can search for a corresponding AS based on an AS number. For brevity, in embodiments of this application, a specific AS is subsequently represented in a simplified manner in a form of "AS + number". For example, an AS is represented as an AS 1 in a simplified manner.

AS identifier: The AS identifier indicates data that identifies an AS. For example, the AS identifier is an AS number or an AS name. The AS number is also referred to as a number of an AS. The AS number is a positive integer. Generally, the AS number ranges from 1 to 65535.

Autonomous system path (autonomous system path, AS_path): The autonomous system path is an AS sequence. The AS_path is used to record all ASs that a border gateway protocol (border gateway protocol, BGP) route passes through from a source AS to a destination AS. A relationship between each BGP route sender and an upstream AS of the sender can be determined based on the AS_path. For example, a pair of adjacent ASs in the AS_path represents an upstream AS of a current AS. If the upstream AS is a provider of the current AS, the pair of ASs has a C2P relationship. For example, in a BGP update message, an AS_path corresponding to a prefix P6 is [AS 3 AS 1 AS 6], indicating that the prefix P6 originates from an AS 6, and then the prefix P6 passes through an AS 1 and an AS 3 in sequence. The AS 6 and the AS 1 have a C2P relationship, and the AS 1 and the AS 3 have a C2P relationship.

AS relationship: The AS relationship is a relationship between two neighboring ASs. The AS relationship affects a traffic forwarding mode and a route selection mode between the two neighboring ASs. The AS relationship includes a peer to peer (peer to peer, P2P) relationship, a provider to customer (provider to customer, P2C) relationship, a customer to provider (customer to provider, C2P) relationship, and a sibling to sibling (sibling to sibling, S2S) relationship. The AS relationship is usually a business relationship. The AS relationship depends on a business contract signed between internet service providers (internet service providers, ISPs) to which ASs belong.

The P2P relationship indicates that two neighboring ASs are equivalent in status. Two ASs that have a P2P relationship advertise a route of the ASs and a route of the customer AS directly connected to the ASs to each other. Generally, the two ASs that have the P2P relationship do not need to pay for each other. Generally, the two ASs that have the P2P relationship do not exchange a route of a customer AS of the customer AS of the ASs, to avoid that the customer AS of the customer AS accesses the Internet through the ASs.

The C2P relationship indicates that two ASs have a relationship between a customer (customer) and a provider (provider). The provider AS provides Internet (Internet) access services and forwards service traffic for the customer AS. The customer AS communicates with other parts of the Internet through the provider AS. Generally, the customer AS needs to pay for bandwidth and network connection services of the provider AS. Routes exchanged between ASs in the C2P relationship are more extensive than routes exchanged between ASs in the P2P relationship. Generally, in the C2P relationship, the provider AS sends a route of the provider AS, a route of the customer AS of the provider AS, and a route of a customer AS (lower-level AS) of the customer AS of the provider AS to the customer AS. The customer AS sends the route of the customer AS to the provider AS. In this way, the customer AS can obtain a complete routing table based on the routes sent by the provider AS and determine how to send traffic to the network connected to the provider AS. The provider AS can determine which traffic should be sent to the customer AS based on the routes sent by the customer AS. In a traffic forwarding process, the customer AS is usually located downstream of the provider AS. The customer AS may select the provider AS as a next hop to forward traffic to a destination via the provider AS.

P2C relationship: The P2C is similar to the reverse description of the C2P relationship, the C2P relationship is described from the perspective of the customer AS, and the P2C relationship is described from the perspective of the provider AS. The description of the C2P relationship is the same as that of the P2C relationship.

S2S relationship: Two ASs in the S2S relationship can freely exchange all routes. In a typical example, two ASs of a same organization (for example, two ASs managed by a same city or a same ISP) have an S2S relationship.

For example, refer to Table 1. Table 1 shows valid AS relationships.

**Table 1**

| Role of a BGP route sender | Role of a BGP route receiver | Define an AS relationship from the BGP route sender |
|---|---|---|
| customer | provider | C2P |
| provider | customer | P2C |
| peer | peer | P2P |
| sibling | sibling | S2S |

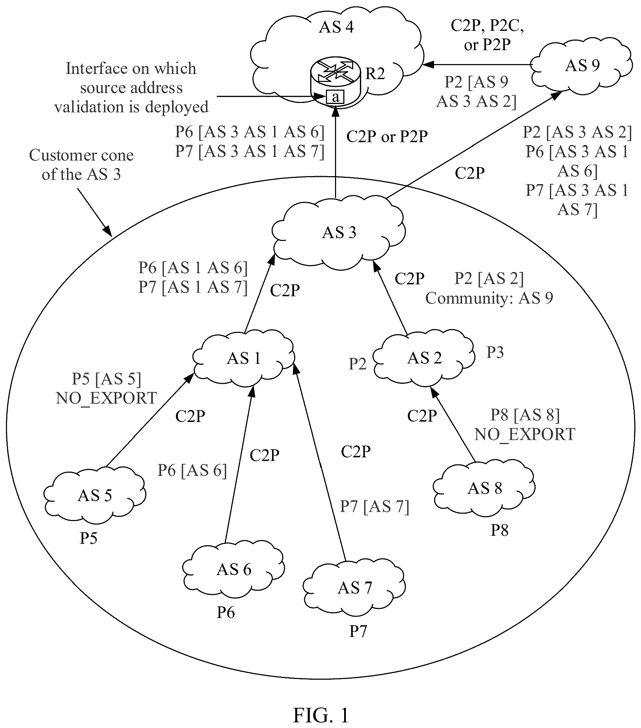

Customer cone (customer cone): A customer cone of an AS is a set of the AS, all customer ASs directly connected to the AS, and all customer ASs indirectly connected to the AS. A set of customer ASs of an AS are determined, and a set of lower-level customer ASs of each of the set of the customer ASs are traced, so that a customer cone of the AS can be constructed. For example, refer to FIG. 1. In FIG. 1, a circle is used to represent a customer cone of the AS 3, and each AS within a range of the circle belongs to the customer cone of the AS 3. As shown in FIG. 1, when the customer cone of the AS 3 is determined, the AS 3 may be first determined as an AS in the customer cone. Then, each level is traversed from the AS 3 to find out ASs of all levels. Finally, a set of all the ASs that can be reached through the AS 3 is obtained. In the set, ASs at the last level do not have customer ASs. In this example, the customer cone of the AS 3 is {AS 3, AS 1, AS 2, AS 5, AS 6, AS 7, AS 8}. The customer cone is usually an unordered set. Each AS in any position of the set has the same meaning. For ease of description, in embodiments, when the customer cone is described, the owner AS 3 of the customer cone is placed at the top of the customer cone, and other ASs except the owner of the customer cone are arranged in ascending order in the customer cone. In addition, in embodiments, "{}" is used to represent a set.

In FIG. 1, "C2P" is marked between the AS 1 and the AS 3, indicating that the AS 1 is a customer AS of the AS 3, and the AS 1 and the AS 3 have a C2P relationship. In FIG. 1, P2 [AS 2] community: AS 9 indicates that a BGP update message sent from the AS 2 to the AS 3 includes a prefix P2 and a community (community) attribute. A value of the community attribute is AS 9. P2 [AS 2] community: AS 9 indicates that after the AS 2 advertises the prefix P2 to the AS 3, the AS 3 is allowed to further advertise the prefix P2 to the AS 9, but the AS 3 is not allowed to further advertise the prefix P2 to other ASs except the AS 9. In FIG. 1, P5 [AS 5] NO_EXPORT indicates that after the AS 5 advertises the prefix P5 to the AS 1, the AS 1 is not allowed to advertise the prefix P5 to other ASs. In FIG. 1, P8 [AS 8] NO_EXPORT indicates that after the AS 8 advertises a prefix P8 to the AS 2, the AS 2 is not allowed to advertise the prefix P8 to other ASs.

Autonomous system provider authorization (autonomous system provider authorization, ASPA) database: The database is a database maintained by ISP and internet engineering task force (internet engineering task force, IETF). The ASPA database is used to record and manage ASs and authorized providers corresponding to the ASs on the global Internet. For example, the ASPA database includes identifiers of customer ASs and an authorized provider AS set. The authorized provider AS set includes identifiers of one or more authorized provider ASs. An authorized provider AS is, for example, an authorized AS that is allowed to propagate a route received from a customer AS. If one customer AS has a plurality of authorized provider ASs, an identifier of the customer AS and an identifier of each authorized provider in the plurality of authorized provider ASs are usually registered in a same record in the ASPA database. For example, the AS 1 signs a contract with a provider Y. The provider Y adds a record in the ASPA database, where the customer AS in the record includes an AS number of the AS 1, and an authorized provider list in the record includes an AS number of the provider Y. The record indicates that the AS 1 is managed by the provider Y, and the provider Y has the right to further advertise, to a network, the prefix advertised by the AS 1. The ASPA database is managed based on a resource public key infrastructure (resource public key infrastructure, RPKI). The RPKI is a technology that uses digital signatures to validate an authorization relationship between an IP address and an AS. The ASPA database includes authorization certificates of all ASs around the world. These certificates can help ISPs and other network operators validate whether a connected AS is authorized to connect to a specific region.

Internet routing registry (internet routing registry, IRR) database: The database is a database for determining and sharing routing information. In addition, the IRR database records a network topology and relationships between ASs. The IRR database uses the routing policy specification language (routing policy specification language, RPSL) to describe stored data. The RPSL is an object-oriented language, and defines 13 types of objects. The autonomous system number (autonomous system number, aut-num) is one of the objects to describe ASs. An AS relationship can be extracted through an aut-num routing policy attribute. The IRR database allows ISPs, content delivery network (content delivery network, CDN), or other network operators to register, advertise, and maintain routing information in the database. The IRR database provides various tools and query interfaces, so that devices can access, through the tools or the query interfaces, the data stored in the IRR database. The query interfaces of the IRR database are, for example, a network information query service (WHOIS) interface and an RPSL interface. A router may invoke the query interface of the IRR database to send a query request to the IRR database to access the IRR database, so as to obtain the data stored in the IRR database.

Route origin authorization (route origin authorization, ROA) database: The database is a database that records correspondences between prefixes and ASs. A prefix of an AS can be obtained by querying the ROA database. The ROA database stores ROA records issued by each AS. The ROA record includes information such as a prefix and a validity period of the AS. The ROA record is equivalent to a digital certificate. The ROA record can prove that a prefix is owned and managed by a specific AS. For example, the AS 1 has a prefix 10.0.0.0/24, and the AS 1 creates a record in the ROA database. The record includes the AS number and the prefix 10.0.0.0/24 of the AS 1. The record indicates that the prefix 10.0.0.0/24 is advertised by the AS 1. Therefore, a risk that the prefix owned by the AS 1 is advertised by another unauthorized AS, causing a malicious attack is reduced. To query IP address prefixes of an AS, a query interface provided by the ROA database may be invoked based on an AS number of the AS, so that the prefixes of the AS can be obtained. In a possible implementation, it is considered that information stored in the ROA database is usually submitted by the AS, and not all ASs submit an ROA record. Therefore, the information in the ROA database may not be complete. When querying the prefix, the router validates or supplements the prefix corresponding to the AS with reference to other data sources except the ROA database, so that the obtained prefix of the AS is more accurate.

A source address validation table includes one or more source address validation entries (SAV entries). The source address validation entry indicates a correspondence between a prefix and a valid inbound interface. The source address validation entry includes the prefix and an identifier of the valid inbound interface. The prefix in the source address validation entry can be an IPv4 prefix or an IPv6 prefix. After the inbound interface receives a data packet, the network device matches a source address of the data packet with the prefix in each source address validation entry. If a source address validation entry that matches the source address of the data packet exists (the source address of the data packet includes the prefix in the source address validation entry), the network device considers the source address of the data packet valid, and the network device forwards the data packet. If no source address validation entry that matches the source address of the data packet exists, the network device considers the source address of the data packet invalid and drops the data packet.

The identifier of the interface is, for example, a name of the interface, an IP address of the interface, a card number of an interface card where the interface is located, an ID of the interface, a tag (tag) of the interface or a group identifier (group ID) of the interface, a board number of a service board where the interface is located, a number of a slot where the interface is located, or a number of the interface.

The terms "first correspondence", "second correspondence", "third correspondence", and "fourth correspondence" in the specification and claims of embodiments of this application describe correspondences between different data separately. The following "first correspondence", "second correspondence", "third correspondence", and "fourth correspondence" may all come from, for example, a database. For example, a correspondence is a record in the database. For example, the first correspondence comes from an ASPA database or an IRR database, and the second correspondence comes from an ROA database or an IRR database. For example, the first correspondence comes from a second ASPA database described below. For application of the first correspondence, refer to Embodiment 1-a and Embodiment 1-b. For example, the second correspondence comes from a second ROA database described below. For application of the second correspondence, refer to Embodiment 3-a and Embodiment 3-b.

In the specification and claims of embodiments of this application, the term "first region" describes a region related to a relationship between ASs, and the term "second region" describes a region related to a relationship between a prefix and an AS. The first region and the second region may be a same region, or may be different regions.

Some embodiments of this application relate to correcting a customer cone based on a region or a plurality of databases. To distinguish and describe an uncorrected customer cone and a corrected customer cone, the following uses a "first customer cone" to describe the uncorrected customer cone, for example, an initial customer cone obtained based on a standard ASPA database, and uses a "second customer cone" to describe the corrected customer cone. The second customer cone is, for example, obtained by correcting the first customer cone based on the region or the plurality of databases.

Some embodiments of this application relate to correcting a prefix set based on a region or a plurality of databases. To distinguish and describe an uncorrected prefix set and a corrected prefix set, the following uses a "first prefix set" to describe the uncorrected prefix set, for example, an initial prefix set obtained based on a standard ROA database, and uses a "second prefix set" to describe the corrected prefix set. The second prefix set is, for example, obtained by correcting the first prefix set based on the region or the plurality of databases.

The following describes application scenarios of embodiments of this application by using examples.

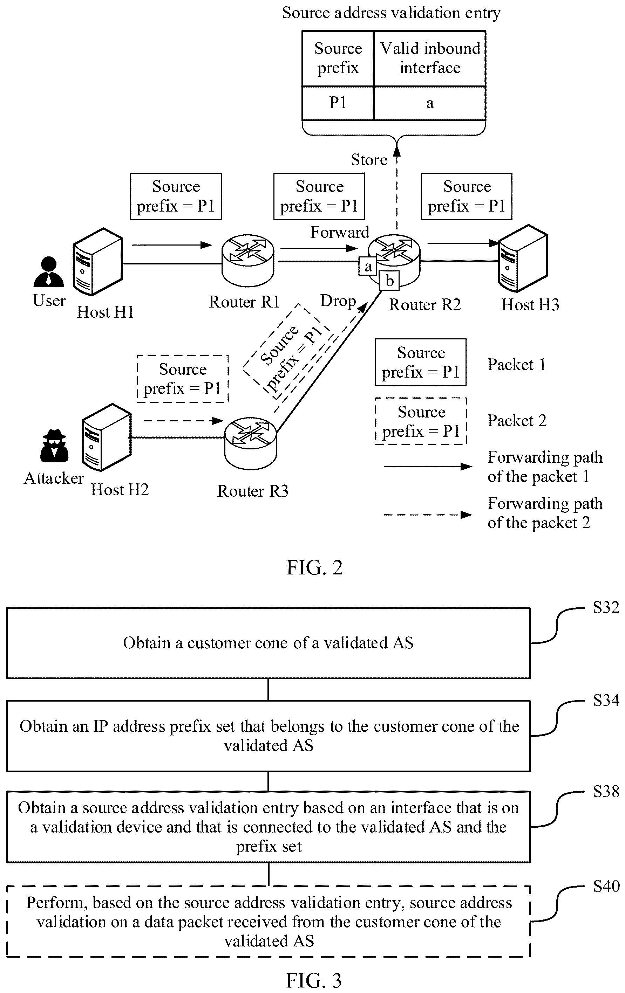

Embodiments of this application may be applied to a source address validation scenario. For example, refer to FIG. 2. FIG. 2 is a diagram of a source address validation scenario according to an embodiment of this application. A router R2 stores a source address validation entry, where the source address validation entry includes a source prefix and a valid inbound interface. In the source address validation entry, content of a source prefix entry is a prefix P1, and content of a valid inbound interface entry is an identifier of an interface a. In FIG. 2, the character "a" is used to represent the identifier of the interface a in the source address validation entry. The meaning of the source address validation entry in FIG. 2 is that, for the router R2, the valid inbound interface of a packet whose source address in a packet header includes the source prefix P1 is the interface a.

As a specific example in which validation on a source address succeeds, a host H1 is a legal holder of the prefix P1, and an IP address of the host H1 includes the prefix P1. The host H1 sends a packet 1 to a host H3. A source address of the packet 1 is the IP address of the host H1. The packet 1 reaches the interface a of the router R2. The router R2 matches the source address (the IP address of the host H1) of the packet 1 with the source prefix in the source address validation entry. The router R2 determines that the source address of the packet 1 includes the prefix P1, and further queries the inbound interface corresponding to the prefix P1 to obtain the inbound interface a. The router R2 determines that the interface receiving the packet 1 is the same as the inbound interface queried from the source address validation entry, and the router R2 validates the source address of the packet 1 successfully, so that the packet 1 can pass through the router R2.

As a specific example in which the source address validation fails, an attacker controls a host H2 to send a packet 2, where a source address of the packet 2 includes a forged source IP address, and the forged source IP address also includes the prefix P1. The packet 2 reaches an interface b of the router R2. The router R2 matches the source address of the packet 2 with the source prefix in the source address validation entry. The router R2 determines that the source address of the packet 2 includes the prefix P1, and further queries the inbound interface corresponding to the prefix P1 to obtain the inbound interface a. The router R2 determines that the interface (the interface b) receiving the packet 2 is different from the interface (the interface a) queried from the source address validation entry, the router R2 fails to validate the source address of the packet 2, and the router R2 drops the packet 2, so that the packet 2 cannot be further forwarded by the router R2.

Considering the strong connectivity of the Internet, the inbound interface corresponding to the source address of the packet can be validated through a source address validation scheme. This can greatly detect exceptions of the inbound interface and reduce a risk caused by source address forgery.

Source address validation using border gateway protocol update message, autonomous system provider authorization, and route origin authorization (source address validation using BGP UPDATEs, ASPA, and ROA, BAR-SAV) is a source address validation method using BGP update (BGP update) messages, the ASPA database, and the ROA database. In this method, the accurate source address validation entry is obtained through the BGP update message, the ASPA database, and the ROA database. Therefore, based on the address validation entry, the router deployed with source address validation can accurately determine which inbound interface or inbound interfaces of the device is/are to be reached by the packet carrying a valid source address, thereby reducing the probability of errors occurring during source address validation.

FIG. 3 is a flowchart of a BAR-SAV method according to an embodiment of this application. The BAR-SAV method includes the following step S32 to step S38.

The following step S32 to step S38 are performed by, for example, a network device that performs source address validation. The network device is, for example, a router, a switch, or a firewall. The network device is, for example, deployed at a border of an AS, and the network device is, for example, referred to as an autonomous system boundary router (autonomous system boundary router, ASBR). Source address validation is performed on a customer cone of an AS connected to the inbound interface on which source address validation is deployed on the network device. The following describes, by using a "first AS", the AS connected to the inbound interface on which source address validation is deployed on the network device that performs source address validation. The first AS may also be referred to as a validated AS. For example, in the network topology shown in FIG. 1, the AS 3 and the AS 4 have a C2P relationship. The router R2 is deployed in the AS 4. The router R2 includes an interface a, and the interface a is connected to the AS 3. Source address validation is deployed on the interface a. The router R2 can perform source address validation to filter out source address forged traffic in the customer cone of the AS 3 from traffic received from the interface a. In this scenario, the router R2 is the network device, and the AS 3 is the first AS.

The following step S32 to step S38 are, for another example, performed by the control device. The control device is configured to control and manage the network device that performs source address validation. The control device is, for example, a controller, a centralized diagnostic device, or a centralized management device. The control device communicates, by using a control plane protocol or a management plane protocol, with the network device that performs source address validation. For example, the control device communicates, by using the BGP, the path computation element protocol (path computation element protocol, PCEP), the BGP monitoring protocol (BGP monitoring protocol, BMP), or the netstream (netstream) protocol, with the network device that performs source address validation.

Step S32: Obtain a customer cone of the first AS.

For example, the network device is the router R2 deployed in the AS 4, the first AS is the AS 3 connected to the router R2, and the router R2 obtains the customer cone of the AS 3 based on the ASPA database and the BGP update message received by the router R2.

For example, the ASPA database that is publicly available is shown in Table 2 below.

**Table 2**

| Identifier of a customer AS (customer AS) | Authorized provider AS set |
|---|---|
| AS 3 | {AS 4, AS 9} |
| AS 5 | {AS 1} |
| AS 6 | {AS 1} |
| AS 8 | {AS 2} |
| AS 10 | {AS 11, AS 12} |
| AS 20 | {AS 21, AS 22, AS 23} |

The network device queries the ASPA database indicated above based on the AS 3. For example, the network device determines whether an authorized provider AS set in each record in the ASPA database includes the AS 3, so as to learn which ASs register the AS 3 as an authorized provider of the ASs in the ASPA database. In this example, the network device does not find the customer AS of the AS 3 in the ASPA database, indicating that no AS has registered the AS 3 as an authorized provider of the AS in the ASPA database.

For example, the BGP update message received by the network device from the AS 3 includes content shown in Table 3.

**Table 3**

| Prefix | AS_path |
|---|---|
| P6 | [AS 3 AS 1 AS 6] |
| P7 | [AS 3 AS 1 AS 7] |

The network device traverses all the received BGP update messages. The network device determines whether the AS_path in the received BGP update message includes the AS 3, obtains, from all the received BGP update messages, a BGP update message whose AS_path includes the AS 3, for example, P2 [AS 9 AS 3 AS 2] in the following table, and obtains a BGP update message set shown in Table 4 through summarization.

**Table 4**

| Prefix | AS_path |
|---|---|
| P2 | [AS 9 AS 3 AS 2] |
| P6 | [AS 3 AS 1 AS 6] |
| P7 | [AS 3 AS 1 AS 7] |

After the network device obtains the BGP update message set whose AS_path includes the AS 3, the network device obtains, based on the AS_path in each BGP update message in the BGP update message set, an AS located downstream of the AS 3 from the AS_path, and uses the AS as an AS in the customer cone of the AS 3. For example, the network device obtains the AS 2 from AS_path [AS 9 AS 3 AS 2] according to the first entry in the foregoing Table 4; the network device obtains the AS 1 and the AS 6 from AS_path [AS 3 AS 1 AS 6] according to the second entry in the foregoing Table 4; and the network device obtains the AS 1 and the AS 7 from AS_path [AS 3 AS 1 AS 7] according to the third entry in the foregoing Table 4. Therefore, the network device determines that {AS 3, AS 1, AS 2, AS 6, AS 7} is a subset of the customer cone of the AS 3. The network device uses the set {AS 3, AS 1, AS 2, AS 6, AS 7} as an initial customer cone of the AS 3, traverses the ASPA database based on the AS in the initial customer cone, and performs the following steps (1) to (7).

Step (1): The network device uses the first AS the AS 3 in the initial customer cone as the provider AS to query the customer AS in the publicly available ASPA database. Specifically, for a record in the ASPA database, it is determined whether the authorized provider AS set in the record includes the AS 3. If the authorized provider AS set includes the AS 3, the customer AS in the record is further obtained. If the query result is null, it indicates that the ASPA database does not include the AS that registers the AS 3 as the provider AS of the AS.

Step (2): The network device uses the next AS the AS 1 in the customer cone as the provider AS, and queries the customer AS in the ASPA database to obtain the AS 5 and the AS 6. The AS 6 is already in the customer cone of the AS 3. The network device adds the newly added AS 5 to the end of the initial customer cone and updates the initial customer cone of the AS 3 to {AS 3, AS 1, AS 2, AS 6, AS 7, AS 5}.

Step (3): The network device uses the next AS the AS 2 in the initial customer cone as the provider A to query the customer AS in the ASPA database, and obtains the AS 8. The AS 8 is not in the customer cone of the AS 3. The network device adds the newly added AS 8 to the end of the initial customer cone, and updates the customer cone of the AS 3 to {AS 3, AS 1, AS 2, AS 6, AS 7, AS 5, AS 8}.

Step (4): The network device uses the next AS the AS 6 in the customer cone as the provider AS, queries the customer AS in the ASPA database, and returns a null value.

Step (5): The network device uses the next AS the AS 7 in the customer cone as the provider AS, queries the customer AS in the ASPA database, and returns a null value.

Step (6): The network device uses the next AS the AS 5 in the customer cone as the provider AS, queries the customer AS in the ASPA database, and returns a null value.

Step (7): The network device uses the next AS the AS 8 in the customer cone as the provider AS, queries the customer AS in the ASPA database, and returns a null value.

The AS 8 is already the last AS in {AS 3, AS 1, AS 2, AS 5, AS 6, AS 7, AS 8} of the customer cone of the AS 3. The network device ends a query process, and uses {AS 3, AS 1, AS 2, AS 5, AS 6, AS 7, AS 8}, obtained after the query ends, of the customer cone of the AS 3 as the customer cone of the AS 3.

The network device performs the foregoing process of obtaining an authorized provider list level by level through the initial customer cone determined based on the BGP update message, so that some identifiers that cannot be obtained by using the received BGP routing information and that are of the customer AS can be obtained, and the obtained customer cone is more complete. For example, for the AS 5 in the customer cone of the AS 3, because the network device does not receive the BGP update message whose AS_path includes the AS 5 and the AS 3, the network device cannot obtain the AS 5 as an AS in the customer cone of the AS 3 based on only the BGP routing information. However, the network device can query the authorized provider list based on the AS 1 in the BGP update message to determine that the customer AS of the AS 1 includes the AS 5, so as to obtain the AS 5 as an AS in the customer cone of the AS 3.

In a process in which the network device queries the ASPA database based on the initial customer cone determined based on the BGP update message, the applied ASPA database of the customer cone of the AS 3 is shown in Table 5 below.

**Table 5**

| Identifier of a customer AS (customer AS) | Authorized provider AS set |
|---|---|
| AS 5 | {AS 1} |
| AS 6 | {AS 1} |
| AS 8 | {AS 2} |

In the foregoing table, the first column is the customer AS, and the second column is the authorized provider set of the customer AS.

Step S34: Obtain an IP address prefix set that belongs to the customer cone of the first AS.

An example of a publicly available ROA database is shown in Table 6 below.

**Table 6**

| ROA database | |
|---|---|
| AS identifier | Prefix |
| AS 2 | P3 |
| AS 4 | P4 |
| AS 5 | P5 |
| AS 6 | P6 |
| AS 8 | P8 |
| AS 10 | P10 |
| AS 12 | P12 |
| AS 100 | P100 |

For example, the network device starts, based on the found customer cone {AS 3, AS 1, AS 2, AS 5, AS 6, AS 7, AS 8} of the AS 3, to query for an IP address prefix set that belongs to the customer cone. A process of querying for the IP address prefix set includes step A to step D.

Step A: The network device obtains the customer cone {AS 3, AS 1, AS 2, AS 5, AS 6, AS 7, AS 8} of the AS 3.

Step B: The network device obtains a full BGP update message whose AS_path includes the AS 3, as shown in the foregoing Table 6.

Step C: The network device obtains ROA data of the customer cone of the AS 3. For example, the network device uses each AS in the customer cone of the AS 3 to query the ROA database one by one for a prefix corresponding to the AS, and the obtained result is shown in Table 7 below.

**Table 7**

| ROA database | |
|---|---|
| AS identifier | Prefix |
| AS 2 | P3 |
| AS 5 | P5 |
| AS 6 | P6 |
| AS 8 | P8 |

Step D: The network device traverses ASs in the customer cone of the AS 3 one by one, obtains a prefix corresponding to the traversed AS from the BGP update message obtained in step B, obtains the prefix corresponding to the AS from the ROA data obtained in step C, and queries, based on the prefix, a full prefix that belongs to the customer cone of the AS 3, as shown in Table 8 below.

**Table 8**

| Queried AS | Prefix obtained from a BGP update message | Prefix obtained from an ROA database |
|---|---|---|
| AS 3 | None | None |
| AS 1 | None | None |
| AS 2 | P2 | P3 |
| AS 5 | None | P5 |
| AS 6 | P6 | P6 |
| AS 7 | P7 | None |
| AS 8 | None | P8 |

Step S38: Obtain a source address validation entry based on an interface that is on the network device and that is connected to the first AS and the prefix set.

For example, the network device generates the source address validation entry based on the prefix set {P2, P3, P5, P6, P7, P8} obtained in step S34 and the interface (for example, the interface a in the figure) that is on the network device and that is connected to the AS 3. A source address validation entry is, for example, a row in Table 9 below.

**Table 9**

| Source prefix | Inbound interface |
|---|---|
| P2 | Interface connecting AS 4 to AS 3 |
| P3 | Interface connecting AS 4 to AS 3 |
| P5 | Interface connecting AS 4 to AS 3 |
| P6 | Interface connecting AS 4 to AS 3 |
| P7 | Interface connecting AS 4 to AS 3 |
| P8 | Interface connecting AS 4 to AS 3 |

Optionally, the BAR-SAV method further includes the following step S40.

Step S40: The network device performs, based on the source address validation entry, source address validation on a data packet received from the customer cone of the first AS.

For a source address validation procedure, refer to the foregoing description for FIG. 2.

In the process of obtaining the customer cone of the AS in step S32, processing of the AS relationship is too simplified, and it is considered that a pair of ASs have only one single relationship. For example, it is considered that the AS relationship can only be one of the following: P2P, C2P, P2C, or S2S. However, in different regions, there may be different relationships between ASs. In other words, the relationships between ASs may change according to different regions. For example, a pair of ASs may have a C2P relationship only in a specific region, but do not have the C2P relationship in other regions. Therefore, if regions are not considered during the process of obtaining customer cones, the obtained customer cones may be incorrect.

For example, in a region A, network performance of the AS 2 is better than network performance of the AS 1. The AS 1 is a customer of the AS 2. The AS 1 is connected to the AS 2. The AS 1 accesses the Internet through the AS 2. The AS 2 charges the AS 1. The AS 1 and the AS 2 have a C2P relationship in the region A. In a region B, the network of the AS 2 is weaker than the network of the AS 1. The AS 2 is a customer of the AS 1. The AS 2 accesses the AS 1. The AS 1 charges the AS 2. The AS 2 accesses the Internet through the AS 1. The AS 1 and the AS 2 have a P2C relationship in the region B. If the AS 1 and the AS 2 are belonging AS a C2P relationship in the ASPA database, but that the C2P relationship corresponds to the region A is not displayed in the ASPA database, the customer cone of the AS 2 is collected through the ASPA database when the AS 2 is in the region B, and consequently the AS 1 is regarded as the customer of the AS 2. This is incorrect. If the relationship between the AS 1 and the AS 2 is not registered in the ASPA database, the result that the AS 1 is the customer of the AS 2 cannot be obtained from the ASPA database when the AS 2 is in the region A.

In view of this, in some embodiments of this application, in a BAR-SAV processing procedure, in a process of obtaining a customer cone, a customer AS whose region does not meet a requirement is deleted from the customer cone of the first AS based on the ASPA database reflecting regions. Therefore, the obtained customer cone is corrected to some extent, accuracy of the customer cone is improved, and accuracy of source address validation is improved.

In order to distinguish and describe whether an ASPA database reflects regions, the following uses a "first ASPA database" to describe a standard ASPA database that does not include a region identifier, and uses a "second ASPA database" to describe an ASPA database that includes a region identifier.

For the first ASPA database, refer to the foregoing description. The second ASPA database includes a correspondence between an identifier of a customer AS, an authorization provider AS set, and a region identifier. The region identifier is used to identify a region, and is specifically used to identify a region in which a C2P relationship between two ASs is valid. A data form of the region identifier is, for example, a name of the region, a number allocated to the region, or location coordinates of the region.

For example, the second ASPA database includes at least one record, and each record includes a customer AS field, an authorized provider AS set field, and a region field. For example, if the AS 1 and the AS 2 register a C2P relationship in Europe, a record is created in the second ASPA database. In the record, a customer AS field includes an identifier of the AS 1, an authorized provider AS set field includes an identifier of the AS 2, and a region field includes Europe. The record indicates that the AS 1 and the AS 2 have the C2P relationship in Europe.

Due to the addition of the region identifier, compared with the first ASPA database, the second ASPA database can determine in which region the two neighboring ASs register the C2P relationship, or in which region the C2P relationship between the two neighboring ASs is valid.

For a manner of obtaining the second ASPA database, for example, the network device locally stores the second ASPA database. In a possible implementation, the network device collects a registration region of a C2P relationship between ASs, the network device obtains a region identifier corresponding to the registration region, and the network device adds the region identifier corresponding to the registration region to a first ASPA database stored in the network device. For another example, a storage device connected to the network device via a communication network stores the second ASPA database, the network device sends a query request to the storage device, and the storage device sends, to the network device in response to the query request, data stored in the second ASPA database.

The following uses Embodiment 1-a and Embodiment 1-b to describe the process of obtaining the customer cone by using examples. The following Embodiment 1-a and Embodiment 1-b are performed by, for example, a network device, or a control device.

### Embodiment 1-a

Step S321: Obtain, based on the first ASPA database, an identifier of each AS in the first customer cone of the first AS and an authorized provider list corresponding to each AS in the first customer cone.

The first customer cone includes at least one customer AS of the first AS. For example, the process of obtaining the first customer cone includes step (1) to step (3).

Step (1): Use the first AS as the authorized provider AS, and query the first ASPA database for the customer AS of the first AS.

Step (2): Obtain a downstream AS of the first AS in the AS_path based on the BGP update message.

Step (3): Use the downstream AS of the first AS as the authorized provider AS, and query the first ASPA database for a customer AS corresponding to the downstream AS of the validated AS.

Step (3) may be performed once or more times. That the step may be performed more times indicates that the found customer AS is used as the authorized provider AS again, and the first ASPA database is queried for the corresponding customer AS.

The first customer cone includes the customer AS obtained in step (1) and the customer AS obtained in step (3).

Step (1) may be performed first, and then step (2) and step (3) are performed; or step (2) and step (3) may be performed first, and then step (1) is performed; or step (2) and step (1) are performed at the same time. For details about the query, refer to the description of step S32.

For example, the network device is located in the AS 4, and the first AS is the AS 3 connected to the inbound interface of the network device. The network device obtains, based on the first ASPA database, the AS that belongs to the customer cone of the AS 3. For example, the network device queries, based on the AS 3, the first ASPA database for the customer AS corresponding to the AS 3, but does not find the customer AS corresponding to the AS 3. The network device queries, based on the AS 3, a downstream AS of the AS 3 in the received BGP update message, to obtain the AS 1 and the AS 2. The network device queries, based on the AS 1 and the AS 2, the first ASPA database for the customer AS corresponding to the AS 1 and the customer AS corresponding to the AS 2, to obtain the customer cone {AS 5 AS 6 AS 8} of the AS 3 and the authorized provider list corresponding to the first customer cone, as shown in Table 10 below.

**Table 10**

| Identifier of a customer AS | Authorized provider AS set |
|---|---|
| AS 5 | {AS 1} |
| AS 6 | {AS 1} |
| AS 8 | {AS 2} |

Step S322: Obtain, based on the first customer cone, the authorized provider list, and the second ASPA database, a first region identifier corresponding to each AS in the first customer cone.

The following uses an example in which the first region identifier is obtained for one AS (the third AS) in the first customer cone for description. A process in which the first region identifier is obtained for another AS in the first customer cone is similar to the process in which the first region identifier is obtained for the third AS. The first customer cone includes the third AS, the authorized provider AS set in the first ASPA database includes the second AS, and the third AS is obtained by querying the first ASPA database for the customer AS based on the AS identifier of the second AS.

For example, in the process of performing step S322, the second ASPA database is searched based on the AS identifier of the third AS and the AS identifier of the second AS. If a customer AS field in a record in the second ASPA database includes the AS identifier of the third AS, and an authorized provider AS set field in the record includes the identifier of the second AS, the first region identifier in the record is further queried as the first region identifier corresponding to the third AS.

In a specific example, the network device performs step S321 to obtain that the customer cone of the AS 3 includes {AS 5 AS 6 AS 8}. For the AS 6 in the customer cone, the AS 6 is a customer AS obtained through querying based on the AS 1, and the network device queries, based on an AS number of the AS 6 and the AS number of the AS 1, the second ASPA database for the result shown in Table 11 below. The meaning of Table 11 is that the AS 6 and the AS 1 have a C2P relationship in Europe. The AS 3 is a specific example of the first AS, the AS 1 is a specific example of the second AS, the AS 6 is a specific example of the third AS, and Europe is a specific example of the identifier of the first region.

**Table 11**

| Customer AS (customer AS) | Authorized provider AS set | Regions (Asia, Europe, North America, South America, and Africa) |
|---|---|---|
| AS 6 | {AS 1} | Europe |

In a possible implementation, if no record corresponding to the third AS is found in the second ASPA database, it indicates that the third AS registers a global entry, it is determined that the C2P relationship between the third AS and the second AS is globally valid, and the third AS is retained in the first customer cone.

Step S323: Correct the first customer cone based on the region in which the first AS is located and the first region identifier corresponding to each AS in the first customer cone, to obtain the second customer cone.

For a manner of determining the region in which the first AS is located, if the network device and the first AS are located in a same region, the network device may determine a region in which this device is currently located as the region in which the first AS is located. If the network device and the first AS are located in different regions, the network device may communicate with the first AS, and receive the region that is sent by the first AS and in which the first AS is located.

In a possible implementation, if the first AS is located in a region indicated by the first region identifier, it is determined that the AS corresponding to the first region identifier is accurate, and the AS corresponding to the first region identifier is retained in the customer cone. If the first AS is not located in the region indicated by the first region identifier, it is determined that the AS corresponding to the first region identifier is inaccurate, and the AS corresponding to the first region identifier is deleted from the customer cone. Based on this manner, the customer cone is corrected, and an AS whose region does not meet an actual situation is excluded from the first customer cone to obtain the more accurate second customer cone.

The following uses determining whether to delete the third AS from the customer cone as an example for description, and logic for determining whether to delete another AS from the customer cone is similar. For example, the first customer cone includes the third AS, and the third AS is obtained by querying the first ASPA database for the customer AS by using the second AS as the authorized provider AS. The second ASPA database records that the third AS and the second AS have a C2P relationship in the first region. For example, the second ASPA database includes a correspondence between the AS identifier of the third AS, the AS identifier of the second AS, and the first region identifier. If the first AS is located in the first region, it is determined that the third AS is an appropriate AS in the customer cone, and the third AS is retained. Therefore, the determined second customer cone includes the third AS. If the first AS is not located in the first region, the third AS is deleted from the first customer cone. Therefore, the determined second customer cone includes the third AS. Based on the foregoing method, it is equivalent to that accuracy of the ASs in the customer cone is validated one by one with reference to the region in which the first AS is located, thereby reducing a probability that an incorrect AS occurs in the customer cone.

For example, the network device performs step S321 to obtain that the customer cone of the AS 3 includes {AS 5 AS 6 AS 8}. The AS 6 is a customer AS obtained through querying based on the AS 1. The network device uses the AS 6 as the customer AS, and queries the second ASPA database for the result shown in the foregoing Table 11. The foregoing Table 11 shows that the authorized provider AS set corresponding to the AS 6 includes {AS 1}, and the first region identifier corresponding to the AS 6 is Europe. If the AS 3 is not currently in Europe, it is determined that the AS 6 validation fails, and the AS 6 is deleted from the customer cone of the AS 3. If the AS 3 is not currently in Europe, it is determined that validation on the AS 6 succeeds, and the AS 6 is retained in the customer cone of the AS 3.

In the foregoing implementation, the first region identifier is obtained from the second ASPA database based on two parameters: the customer cone and the authorized provider. In another possible implementation, the first region identifier may be alternatively obtained from the second ASPA database based on one of the following: the customer cone or the authorized provider list. For example, Embodiment 1-a may be alternatively implemented through the following step S321' to step S323'.

Step S321': Obtain the first customer cone of the first AS based on the first ASPA database.

Step S322': Obtain, based on the first customer cone and the second ASPA database, the first region identifier corresponding to each AS in the first customer cone.

In an example scenario, an ISP advertises that an AS managed by the ISP appears only in a specific region, and it is illegal that the AS appears in another region. In this scenario, when the first region identifier is obtained, the authorized provider list may not be considered. For example, for the third AS, when the first region identifier is obtained, the second ASPA database may be searched for the first region identifier based on the AS identifier of the third AS, without considering the authorized provider AS of the third AS.

Step S323': Correct the first customer cone based on the region in which the first AS is located and the first region identifier corresponding to each AS in the first customer cone, to obtain the second customer cone.

According to the method provided in this embodiment, the AS in the customer cone is validated based on the region in which the first AS is located and the second ASPA database, and the AS that fails to be validated is deleted from the customer cone, thereby reducing a probability that an incorrect AS whose region does not meet a requirement occurs in the customer cone, improving accuracy of the customer cone, and reducing a probability that an error occurs in a subsequent source address validation processing process.

Embodiment 1-a describes the process of obtaining the customer cone based on the two databases (the first ASPA database and the second ASPA database). In Embodiment 1-a, the global ASPA database (the first ASPA database) is separated from the ASPA database (the second ASPA database) including the first region identifier, thereby reducing implementation difficulty caused by changes to the global ASPA database. In some other embodiments, the two databases (the first ASPA database and the second ASPA database) are combined into one database. For example, the first region identifier and the global ASPA database are combined to form a unified ASPA database, so that one database search operation is saved in a process of obtaining a customer cone. The following uses Embodiment 1-b as an example for description.

### Embodiment 1-b

Step S321": Obtain, based on the second ASPA database, the first customer cone of the first AS and the first region identifier corresponding to each AS in the first customer cone.

For example, the process of obtaining the first customer cone includes step (1) to step (3).

Step (1): Use the first AS as the authorized provider AS, and query the second ASPA database for the customer AS corresponding to the first AS and the first region identifier corresponding to the customer AS.

Step (2): Obtain the downstream AS of the first AS in the AS_path based on the BGP update message.

Step (3): Use the downstream AS of the first AS as the authorized provider AS, and query the second ASPA database for the customer AS corresponding to the downstream AS of the first AS and the first region identifier corresponding to the customer AS.

The first customer cone includes the customer AS obtained in step (1) and the customer AS obtained in step (3).

Step S322": Correct the first customer cone based on the region in which the first AS is located and the first region identifier corresponding to each AS in the first customer cone, to obtain the second customer cone.

Step S322" is similar to step S323. For details, refer to the description of step S323.

According to the method provided in this embodiment, obtaining the customer cone based on the two databases in Embodiment 1-a is simplified into obtaining the customer cone based on one database, so that the AS whose region does not meet a requirement can be excluded from the customer cone to obtain the relatively accurate customer cone, and also two processes of searching the database is simplified into searching the database once, thereby saving one process of querying the database, reducing operation complexity caused by searching the database twice, and improving efficiency of obtaining the customer cone.

Embodiment 1-a and Embodiment 1-b describe the method for improving customer cone accuracy based on the ASPA database including the first region identifier. The ASPA database that includes the first region identifier in Embodiment 1-a and Embodiment 1-b may be alternatively replaced with another database that records an AS relationship and a region in which the AS relationship is located. For example, the ASPA database including the first region identifier is replaced with the IRR database including the first region identifier. For example, a record in the IRR database includes an AS identifier field, a relationship field, and a region field. The AS identifier field includes an AS identifier of each AS of two neighboring ASs. The relationship field is used to describe a relationship between the two neighboring ASs. The region field includes the first region identifier. Alternatively, the ASPA database including the first region identifier is replaced with a correspondence that includes the identifier of the customer AS, the identifier of the authorized provider AS, and the first region identifier in another form other than the database. The first region identifier may be obtained from the IRR database, and the customer cone may be obtained based on the first region identifier. In this manner, the record in the IRR database is an example of the first correspondence.

In conclusion, in the method of Embodiment 1-a and Embodiment 1-b, because the correspondence between the AS relationship and the first region identifier is recorded, in the process of obtaining the customer cone, whether the AS relationship corresponding to the first region identifier is established is validated based on the region in which the first AS is located and the region indicated by the first region identifier, the AS whose C2P relationship is not established is deleted from the customer cone, and the customer AS whose C2P relationship is established is retained in the customer cone. Therefore, it is avoided that the AS that does not have the C2P relationship in the region in which the first AS is located is incorrectly classified into the customer cone, thereby improving accuracy of the customer cone.

Further, based on the more accurate customer cone, the more accurate source address validation entry can be obtained, thereby improving accuracy of source address validation, and reducing a security risk caused by a source address attack initiated by an attacker.

The foregoing describes the implementations that consider regions to improve accuracy of the customer cone. In another possible implementation, IRR data can also be used to supplement the customer cone to improve accuracy of the customer cone to some extent. The following uses Embodiment 2-a as an example for description. The following Embodiment 2-a is performed by, for example, a network device, or a control device.

### Embodiment 2-a

Step S321a: Obtain, based on the ASPA database, the first customer cone of the first AS and the authorized provider list corresponding to the first customer cone.

The ASPA database is, for example, a standard global ASPA database (the first ASPA database) that does not include a region identifier, or an ASPA database (the second ASPA database) that includes a region identifier. For step S321a, refer to the description of step S321.

Step S322b: Obtain, based on the IRR database, an AS relationship between the first customer cone and the authorized provider list.

A query manner of the IRR database includes a query manner A and a query manner B below. The following uses a process of querying the IRR database for an AS (the third AS) in the first customer cone as an example for description. A process of querying for another AS in the first customer cone is similar to the process of querying for the third AS. The first customer cone includes the third AS, the authorized provider AS set in the first ASPA database includes the second AS, and the third AS is obtained by querying the first ASPA database for the customer AS based on the second AS.

Query manner 1 of the IRR database: Query a relationship between a pair of ASs based on identifiers of the pair of ASs.

For example, in the process of performing step S322b, based on the identifier of the third AS and the identifier of the second AS (for example, the AS number of the third AS and the AS number of the second AS), an AS identifier field in each record in the IRR database is queried. If an AS identifier field in a record includes the identifier of the third AS and the identifier of the second AS, a relationship field in the record is further queried, to obtain a relationship between the third AS and the second AS from the relationship field.

The query result (the AS relationship) obtained from the IRR database includes three cases.

Case 1: It is determined that the relationship between a pair of neighboring ASs is the C2P relationship.

Case 2: It is determined that the relationship between the pair of neighboring ASs is not the C2P relationship.

Case 3: The IRR database has no description about the relationship between the pair of neighboring ASs.

For example, the network device is located in the AS 4, and the first AS is the AS 3 connected to the network device. The network device obtains the first customer cone based on the first ASPA database, and the authorized provider AS set is shown in Table 10. The network device queries the IRR database through each AS in the customer cone {AS 5 AS 6 AS 8} of the AS 3 shown in Table 10, to validate whether the authorized provider AS set shown in Table 10 is accurate. The network device queries, based on an identifier of the AS 5 and the identifier of the AS 1, a relationship that is between the AS 5 and the AS 1 and that is recorded in the IRR database, and the obtained query result is used to describe the C2P relationship. The network device queries, based on an identifier of the AS 6 and the identifier of the AS 1, a relationship that is between the AS 6 and the AS 1 and that is recorded in the IRR database, and the obtained query result is used to describe a non-C2P relationship. The network device queries, based on an identifier of the AS 8 and the identifier of the AS 2, a relationship that is between the AS 8 and the AS 2 and that is recorded in the IRR database, and does not find the relationship between the AS 8 and the AS 2. A query result is shown in Table 12. The AS 3 is a specific example of the first AS, the AS 1 is a specific example of the second AS, the AS 5 is a specific example of the third AS, and the C2P relationship is a specific example of the relationship between AS 1 and AS 5.

**Table 12**

| Identifier of a customer AS | Authorized provider AS set | Query result (a relationship between ASs) of an IRR database |
|---|---|---|
| AS 5 | {AS 1} | The AS 5 and the AS 1 have a C2P relationship |
| AS 6 | {AS 1} | The AS 6 and the AS 1 do not have a C2P relationship |
| AS 8 | {AS 2} | The relationship between the AS 8 and the AS 2 is not described |

Query manner 2 of the IRR database: Use a customer AS to query a provider AS.

For example, in the process of performing step S322b, the third AS is used as the customer AS, and the IRR database is queried for the authorized provider AS set corresponding to the third AS. Whether the authorized provider AS set corresponding to the third AS in the IRR database includes the second AS is determined. If the authorized provider AS set corresponding to the third AS in the IRR database includes the second AS, it is determined that the IRR database records that the third AS and the second AS have the C2P relationship. If the authorized provider AS set corresponding to the third AS in the IRR database does not include the second AS, it is determined that the IRR database records that the third AS and the second AS do not have the C2P relationship.

For example, the network device is located in the AS 4, and the first AS is the AS 3 connected to the router R2. The network device obtains the first customer cone based on the first ASPA database, and the authorized provider AS set is shown in Table 10. The network device queries the IRR database through each AS in the customer cone {AS 5 AS 6 AS 8} of the AS 3 shown in Table 10. The network device queries the IRR database through the AS 5 to find that the authorized provider AS set is, for example, {AS 5 AS 11 AS 12}. Because the authorized provider AS set found in the IRR database includes the AS 5, it is determined that the IRR database records that the AS 5 and the second AS have a C2P relationship. The network device queries the IRR database through the AS 5 to find that the authorized provider AS set is, for example, {AS 1 AS 11 AS 12}. Because the authorized provider AS set {AS 1 AS 11 AS 12} found in the IRR database includes the AS 1, it is determined that the IRR database records that the AS 5 and the AS 1 have the C2P relationship. The network device queries the IRR database through the AS 6 to find that the authorized provider AS set is, for example, {AS 11 AS 12}. Because the authorized provider AS set {AS 11 AS 12} found in the IRR database does not include the AS 1, it is determined that the IRR database does not have any description about the relationship between the AS 6 and the AS 1, or the IRR database records that the AS 6 and the AS 1 do not have the C2P relationship.

Step S323c: Correct the first customer cone based on the AS relationship obtained from the IRR database, to obtain the second customer cone.

The following uses logic of determining whether to retain the third AS in the first customer cone as an example for description, and logic of determining whether to retain another AS in the first customer cone is similar. The third AS is obtained by querying the first ASPA database for the customer AS based on the second AS.

Case 1: The relationship that is between the third AS and the second AS and that is obtained from the IRR database is a C2P relationship.

Case 1 is equivalent to that the ASPA database and the IRR database have consistent descriptions about the relationship between the third AS and the second AS. Both the ASPA database and the IRR database confirm that the third AS and the second AS have the C2P relationship. In case 1, it is determined that the third AS is an appropriate AS in the customer cone, and the third AS is retained, so that the second customer cone still includes the third AS.

Case 2: The relationship that is between the third AS and the second AS and that is obtained from the IRR database is not a C2P relationship.

Case 2 is equivalent to that the ASPA database and the IRR database have different descriptions about the relationship between the third AS and the second AS. The ASPA database confirms that the third AS and the second AS have the C2P relationship, but the IRR database denies that the third AS and the second AS have the C2P relationship. In case 2, the IRR database may be preferentially trusted, and the third AS is deleted from the first customer cone, so that the second customer cone does not include the third AS; or the ASPA database may be preferentially trusted, and the third AS is retained, so that the obtained second customer cone still includes the third AS. For example, a policy is configured on the network device. In case 2, whether to delete the third AS from the first customer cone is determined based on the policy.

Case 3: The IRR database has no description about the relationship between the third AS and the second AS.

In case 3, the third AS may be deleted from the first customer cone, and the obtained second customer cone does not include the third AS; or the third AS may be retained, and the obtained second customer cone still includes the third AS. For example, a policy is configured on the network device. In case 3, the network device determines, based on the policy, whether to delete the third AS from the first customer cone.

In a possible implementation, the policy includes a priority of the IRR database and a priority of the ASPA database, and the network device determines, based on the priority of the IRR database and the priority of the ASPA database, whether to delete the third AS from the first customer cone. For example, if the priority of the IRR database is higher than the priority of the ASPA database, the network device deletes the third AS from the first customer cone. If the priority of the IRR database is lower than the priority of the ASPA database, the network device retains the third AS in the first customer cone.

For example, the network device located in the AS 4 obtains the customer cone {AS 5 AS 6 AS 8} of the AS 3 from the ASPA database. A specific query result is shown in Table 10.

Table 12 shows the query result obtained from the IRR database through each AS in the customer cone {AS 5 AS 6 AS 8}. The C2P relationship between the AS 5 and the AS 1 is reconfirmed through the IRR data. Therefore, the AS 5 is retained in the customer cone of the AS 3. The AS relationship between the AS 6 and the AS 1 is validated as a non-C2P relationship through the IRR data. The network device may determine, based on the policy, whether the AS 6 should be retained in the customer cone of the AS 3. If a record of the relationship between the AS 8 and the AS 2 is not found in the IRR data, the network device may determine, based on the policy, whether to retain the AS 8 in the customer cone of the AS 3.

The foregoing policy includes, for example, the following policy 1 or policy 2.

Policy 1: If the relationship that is between the third AS and the second AS and that is obtained from the IRR database is the C2P relationship, the third AS in the first customer cone is retained. If the relationship that is between the third AS and the second AS and that is obtained from the IRR database is not the C2P relationship, the third AS is deleted from the first customer cone. If the IRR database has no description about the relationship between the third AS and the second AS, the third AS is deleted from the first customer cone.

For example, the first customer cone is {AS 5 AS 6 AS 8}, and a query result obtained from the IRR database is shown in Table 12. The IRR database has a record that the AS 5 and the AS 1 have the C2P relationship, has a record that the AS 6 and the AS 1 have the non-C2P relationship, and has no description about the relationship between the AS 8 and the AS 2. Therefore, the network device retains the AS 5, deletes the AS 6 and the AS 8, and obtains the customer cone {AS 5} (the second customer cone) of the AS 3.

Policy 2: If the relationship that is between the third AS and the second AS and that is obtained from the IRR database is the C2P relationship, the third AS in the first customer cone is retained. If the relationship that is between the third AS and the second AS and that is obtained from the IRR database is not the C2P relationship, the third AS is deleted from the first customer cone. If the IRR database has no description about the relationship between the third AS and the second AS, the third AS is retained in the first customer cone.

For example, the first customer cone is {AS 5 AS 6 AS 8}, and a query result obtained from the IRR database is shown in Table 12. The IRR database has a record that the AS 5 and the AS 1 have the C2P relationship, has a record that the AS 6 and the AS 1 have the non-C2P relationship, and has no description about the relationship between the AS 8 and the AS 2. Therefore, the network device retains the AS 5 and the AS 8, deletes the AS 6, and obtains the customer cone {AS 5 AS 8} (the second customer cone) of the AS 3.

In the method provided in this embodiment, the IRR database is introduced to correct the customer cone obtained based on the ASPA database. Compared with the ASPA database, the IRR database is deployed earlier and more mature. Currently, the IRR database has a larger data volume of registration than the ASPA database, and the IRR database records more AS relationships. Therefore, the IRR database is used as a data source for correcting the customer cone, and this helps reduce impact caused by insufficient data volume of registration in the ASPA database, thereby improving accuracy of the customer cone to some extent, and reducing the probability of errors occurring in the subsequent source address validation process.

The foregoing embodiment focuses on introducing the IRR database to correct the customer cone obtained based on the ASPA database. In another possible implementation, the ASPA database is introduced to correct the customer cone obtained based on the IRR database. The following uses Embodiment 2-b as an example for description. Embodiment 2-b is equivalent to replacing the IRR database in Embodiment 2-a with the ASPA database. For implementation details of each step in Embodiment 2-b, refer to Embodiment 2-a.

### Embodiment 2-b

Step S321a: Obtain, based on the IRR database, the first customer cone of the first AS and the authorized provider list corresponding to the first customer cone.

Step S322b: Obtain, based on the ASPA database, an AS relationship between the first customer cone and the authorized provider list.

Step S323c: Correct the first customer cone based on the AS relationship obtained from the ASPA database, to obtain the second customer cone.

In the method provided in this embodiment, the ASPA database is introduced to correct the customer cone obtained based on the IRR database. Because the IRR database is registered by an operator of each AS, accuracy of data in the IRR database is ensured by the operator. The ASPA database performs centralized management based on an RPKI. A registration and authentication process of the ASPA database is stricter than that of the IRR database. Therefore, the ASPA database is used as a data source for correcting the customer cone, and this helps reduce negative impact caused on accuracy when the IRR database is registered by an operator, thereby improving accuracy of the customer cone to some extent, and reducing the probability of errors occurring in the subsequent source address validation process.

In conclusion, in Embodiment 2-a and Embodiment 2-b, because a customer cone is obtained based on a plurality of available data sources (the ASPA database and the IRR database), a disadvantage caused by a customer cone obtained by a single data source is made up to some extent, and accuracy of the customer cone is improved.

The foregoing Embodiment 1-a, Embodiment 1-b, Embodiment 2-a, and Embodiment 2-b all focus on description of a method for obtaining a customer cone. An embodiment of this application further provides a method for obtaining a prefix set. The foregoing method for obtaining the customer cone and the following method for obtaining the prefix set may be used independently or in combination.

When the foregoing method for obtaining the customer cone is used in combination with the following method for obtaining the prefix set, the second customer cone determined in the foregoing method embodiment is the customer cone in the following method embodiment. For example, after the first customer cone is corrected to obtain the second customer cone by using the foregoing method embodiment, the prefix set of the second customer cone is further corrected by using the following method embodiment. Because both the method for obtaining the customer cone and the method for obtaining the prefix set are improved, accuracy of the prefix set is further improved.

When the foregoing method for obtaining the customer cone and the following method for obtaining the prefix set are used separately, the customer cone in the following method embodiment does not depend on the foregoing method embodiment. For example, for the customer cone of the first AS obtained in an existing manner, the prefix set is obtained by using the following method embodiment, or the prefix set is obtained based on the first customer cone obtained in the foregoing method embodiment. Because the prefix set is corrected by using the following method embodiment, accuracy of the prefix set can also be improved to some extent.

In the process of obtaining the IP address prefix set of the customer cone in step S34, if the region in which the AS advertises the prefix is not considered, accuracy of the obtained prefix set is affected. For example, an AS may advertise different prefixes of the AS in different regions. For example, the AS 2 advertises the prefix P2 in the region A and floods the prefix P2 to the global Internet, and the AS 2 advertises the prefix P3 in the region B and floods the prefix P3 to the global Internet. If the ROA database only records that the prefix P2 and the prefix P3 correspond to the AS 2, but does not show that the prefix P2 corresponds to the region A and the prefix P3 corresponds to the region B, when the customer cone of the AS 3 is in the region A, the ROA database is used, and consequently the prefix P3 is also counted in the prefix set of the customer cone of the AS 3, which is incorrect.

In view of this, in some embodiments of this application, in the BAR-SAV processing procedure, the process of obtaining the prefix set of the customer cone is based on the ROA database that includes the region identifier. The prefix whose region does not meet a requirement is deleted from the customer cone of the first AS, so that the obtained prefix set is corrected to some extent, accuracy of the prefix set of the customer cone is improved, and accuracy of source address validation is improved.

In order to distinguish and describe whether an ROA database includes a region identifier, the following uses a "first ROA database" to describe a standard ROA database that does not include a region identifier, and uses a "second ROA database" to describe an ROA database that includes a region identifier.

For the first ROA database, refer to the foregoing description. The second ROA database includes a correspondence between an AS identifier, a prefix, and a region identifier. Through the second ROA database, a region in which an AS advertises a prefix, or a region in which an belonging relationship between a prefix and an AS is valid can be determined. For example, the second ROA database includes at least one record, and one record includes the identifier of the AS 1, the prefix P1, and Europe. The meaning of the record is that the AS 1 advertises the prefix P1 in Europe, or the prefix P1 belongs to the AS 1 in Europe, or an belonging relationship between the prefix P1 and the AS 1 in European is valid.

For a manner of obtaining the second ROA database, for example, the network device locally stores the second ROA database. In a possible implementation, the network device obtains the region identifier of the region in which the belonging relationship between the prefix and the AS is located, and the network device adds the region identifier corresponding to the registration region to the first ROA database stored in the network device. For another example, a storage device connected to the network device via a communication network stores the second ROA database, the network device sends a query request to the storage device, and the storage device sends, to the network device in response to the query request, data stored in the second ROA database.

The following uses Embodiment 3-a to Embodiment 3-b to describe the process of obtaining the prefix set by using examples. The following Embodiment 3-a and Embodiment 3-b are performed by, for example, a network device, or a control device.

### Embodiment 3-a

Step S341: Obtain the first prefix set of the customer cone of the first AS based on the ROA database.

For example, for each AS in the customer cone of the first AS, the first ROA database is searched, based on the AS identifier of the AS, for the prefix corresponding to the AS identifier, to obtain the first prefix set.

For example, the network device is located in the AS 4, and the first AS is the AS 3 connected to the inbound interface of the network device. After the network device obtains the customer cone of the AS 3, the network device obtains, based on the first ROA database, a prefix corresponding to each AS in the customer cone of the AS 3. For example, the customer cone of the AS 3 is {AS 2 AS 5 AS 6 AS 8}. The network device queries, based on the identifier of the AS 2, the first ROA database shown in Table 13 below for the prefix corresponding to the AS 2, to obtain the prefix P3. The network device queries, based on the identifier of the AS 5, the first ROA database shown in Table 13 below for the prefix corresponding to the AS 5, to obtain the prefix P5. The network device queries, based on the identifier of the AS 6, the first ROA database shown in Table 13 below for the prefix corresponding to the AS 6, to obtain the prefix P6. The network device queries, based on the identifier of the AS 8, the first ROA database shown in Table 13 below for the prefix corresponding to the AS 8, to obtain the prefix P8.

**Table 13**

| ROA database | |
|---|---|
| AS identifier | Prefix |
| AS 2 | P3 |
| AS 5 | P5 |
| AS 6 | P6 |
| AS 8 | P8 |

Step S342: Obtain a second region identifier based on the customer cone, the first prefix set, and the second ROA database.

For example, the customer cone includes the third AS, and the prefix set includes the first prefix. The AS identifier of the third AS and the first prefix are used as indices, and the second ROA database is searched for the second region identifier to obtain a second region identifier corresponding to the third AS and the first prefix. By analogy, the second ROA database is searched for a second region identifier corresponding to each AS in the customer cone and each prefix in the first prefix set.

In a specific example, the customer cone of the AS 3 includes {AS 2 AS 5 AS 6 AS 8}, and the first prefix set of the AS 3 includes {P3 P5 P6 P8}. The correspondence between the customer cone and the first prefix set is shown in Table 13. The network device finds Europe in the second ROA database based on the AS number of the AS 2 and the prefix P3. In addition, the network device finds no corresponding entry in the second ROA database based on the AS number of the AS 5, the AS number of the AS 6, and the AS number of the AS 8. A query result is shown in Table 14 below. The meaning of Table 14 below is that the AS 2 advertises the prefix P3 in Europe, or the belonging relationship between the prefix P3 and the AS 2 is valid in Europe, and the belonging relationship between the prefix P3 and the AS 2 is invalid in other regions outside Europe. The AS 3 is a specific example of the first AS, the AS 2 is a specific example of the second AS, the prefix P3 is a specific example belonging to the prefix of the second AS, and Europe is a specific example of an identifier of the second region.

**Table 14**

| AS identifier | Prefix | Regions (Asia, Europe, North America, South America, and Africa) |
|---|---|---|
| AS 2 | P3 | Europe |

Step S343: Correct the first prefix set based on the region in which the first AS is located and the second region identifier, to obtain the second prefix set.

In a possible implementation, if the first AS is located in a region indicated by the second region identifier, it is determined that the prefix corresponding to the second region identifier is accurate, and the prefix corresponding to the second region identifier is retained in the first prefix set. If the first AS is not located in the region indicated by the second region identifier, it is determined that the prefix corresponding to the second region identifier is inaccurate, and the prefix corresponding to the second region identifier is deleted from the first prefix set.

The following uses determining whether to delete the first prefix from the prefix set as an example for description, and logic for determining whether to delete another prefix from the prefix set is similar. For example, the second ROA database includes a correspondence between the AS identifier of the third AS, the first prefix, and the second region identifier. If the first AS is located in the first region, it is determined that the first prefix is an appropriate prefix in the prefix set, and the first prefix is retained. If the first AS is not located in the first region, it is determined that the first prefix is not an appropriate prefix in the prefix set, and the first prefix is deleted from the prefix set. Based on the foregoing method, it is equivalent to that accuracy of each prefix in the prefix set is validated one by one with reference to the region in which the first AS is located, thereby reducing a probability that an incorrect prefix occurs in the prefix set.

In a possible implementation, if no record corresponding to the AS identifier of the third AS and the first prefix is found in the second ROA database, it is determined that the record of the third AS and the first prefix in the first ROA database is accurate, or that an belonging relationship between the first prefix and the third AS is globally valid, and the network device retains the third AS in the first customer cone.

For example, for the prefix set shown in Table 13, the network device queries the second ROA database for the result shown in the foregoing Table 14. The foregoing Table 14 shows that the prefix corresponding to the AS 2 includes the P3, and the second region identifier corresponding to the AS 2 is Europe. If the AS 3 is currently in Europe, it is determined that the prefix P3 is accurate, and the prefix P3 is retained in the first prefix set, and the obtained second prefix set is {P3 P5 P6 P8}. If the AS 3 is not currently in Europe, it is determined that the prefix P3 is inaccurate, and the prefix P3 is deleted from the first prefix set {P3 P5 P6 P8} to obtain the second prefix set {P5 P6 P8}.

For example, if the region in which the first AS is located is the same as the region indicated by the second region identifier corresponding to the third AS, it indicates that the third AS is appropriate, and the third AS is retained in the first customer cone. If the region indicated by the second region identifier corresponding to the third AS is different from the region in which the first AS is located, the third AS is deleted from the first customer cone. For a manner of validating an AS other than the third AS in the first customer cone, refer to the manner of validating the third AS.

For a manner of determining the region in which the first AS is located, if the network device and the first AS are located in a same region, the network device may determine a region in which this device is currently located as the region in which the first AS is located. If the network device and the first AS are located in different regions, the network device may communicate with the first AS, and receive the region that is sent by the first AS and in which the first AS is located.

According to the method provided in this embodiment, the AS in the customer cone is validated based on the region in which the first AS is located and the second ROA database, and the AS that fails to be validated is deleted from the customer cone, thereby reducing a probability that an incorrect AS whose region does not meet a requirement occurs in the customer cone, improving accuracy of the customer cone, and reducing a probability that an error occurs in a subsequent source address validation processing process.

In the foregoing implementation, the second region identifier is obtained from the second ASPA database based on two parameters: the customer cone and the prefix. In another possible implementation, the second region identifier may be alternatively obtained from the second ASPA database based on one of the following: the customer cone or the prefix.

Embodiment 3-a describes the process of obtaining the customer cone based on the two databases (the first ROA database and the second ROA database). In Embodiment 3-a, the global ROA database (the first ROA database) and the ROA database (the second ROA database) that includes the second region identifier are separated from each other, thereby reducing the implementation difficulty caused by modification of the global ROA database. In some other embodiments, the two databases (the first ROA database and the second ROA database) are combined into one database. For example, the second region identifier is combined with the global ROA database to form a unified ROA database, so that the process of obtaining the customer cone based on the first ROA database is omitted, and the customer cone is obtained based on the second ROA database. The following uses Embodiment 1-b as an example for description.

### Embodiment 3-b

Step S341": Obtain the first prefix set of the customer cone of the first AS and a second region identifier based on the second ROA database.

For example, for each AS in the customer cone of the first AS, the AS identifier of the AS is used as an index to search the first ROA database for a corresponding prefix and the second region identifier, to obtain the first prefix set and the second region identifier.

Step S342": Correct the first prefix set based on the region in which the first AS is located and the second region identifier corresponding to each AS in the first prefix set, to obtain the second prefix set.

Step S342" is similar to step S343. For details, refer to the description of step S343.

Through the method provided in this embodiment, a prefix whose region does not meet a requirement can be excluded from the prefix set, and also one process of querying the database is further saved. Equivalently, obtaining the prefix set based on the two databases in Embodiment 3-a is simplified to obtaining the prefix set based on one database, so that the relatively accurate prefix set can be obtained, and also operations that need to be performed in the process of obtaining the prefix set can be simplified, thereby improving efficiency of obtaining the prefix set.

Embodiment 3-a and Embodiment 3-b describe the method for improving accuracy of the prefix set based on the ROA database that includes the second region identifier. The ROA database that includes the second region identifier in Embodiment 3-a and Embodiment 3-b may be alternatively replaced with another database that can describe the region in which the belonging relationship between the prefix and the AS is located. For example, the ROA database that includes the second region identifier is replaced with the IRR database that includes the second region identifier. For example, a record in the IRR database includes an AS identifier field, a prefix field, a relationship field, and a region field, the AS identifier field includes an AS identifier of an AS, the prefix field includes a prefix, the relationship field is used to describe an belonging relationship between the prefix and the AS, and the region field includes a second region identifier.

In conclusion, in the method of Embodiment 3-a and Embodiment 3-b, because a correspondence between the belonging relationship between the prefix and the AS and the second region identifier is recorded, in the process of obtaining the prefix set, whether the belonging relationship between the prefix and the AS is established is validated based on the region in which the first AS is located and the region indicated by the second region identifier, a prefix that does not have an belonging relationship in the region in which the first AS is located is deleted from the prefix set, and a prefix that has an belonging relationship in the region in which the first AS is located is retained in the prefix set, so as to avoid that a prefix whose region does not meet a requirement is incorrectly classified into the prefix set, thereby improving accuracy of the prefix set.

The foregoing describes the implementations that consider regions to improve accuracy of the prefix set. In another possible implementation, IRR data can also be used to supplement the prefix set to improve accuracy of the prefix set to some extent. The following uses Embodiment 4-a as an example for description. The following Embodiment 4-a is performed by, for example, a network device, or a control device.

### Embodiment 4-a

Step S341a: Obtain the first prefix set of the customer cone of the first AS based on the ROA database.

The ROA database is, for example, a standard global ROA database (the first ROA database) that does not include the second region identifier, or an ROA database (the second ROA database) that includes the second region identifier. For implementation details of step S341a, refer to the description of step S341.

Step S342b: Obtain a relationship between an AS in the customer cone and a prefix in the first prefix set based on the IRR database, the customer cone, and the first prefix set.

The following uses a process of querying the IRR database for a prefix (the first prefix) in the first prefix set as an example for description. The customer cone includes the third AS, the first prefix set includes the first prefix, and the ROA database records that the first prefix belongs to the third AS. For example, in the process of performing step S342b, the IRR database is queried for the relationship between the third AS and the first prefix based on the AS identifier of the third AS and the first prefix. A query process for another prefix in the first prefix set is similar to the query process for the first prefix.

The query result obtained from the IRR database includes three cases.

Case 1: It is determined that a prefix belongs to an AS.

Case 2: It is determined that the prefix does not belong to the AS.

Case 3: The IRR database has no description about a belonging AS of the prefix.

In a specific example, the network device is located in the AS 4, and the first AS is the AS 3 connected to the network device. The first prefix set obtained by the network device based on the ROA database is shown in Table 13. The network device queries the IRR database based on each prefix in the prefix set {P3 P5 P6 P8} of the AS 3 shown in Table 13, to validate whether a correspondence between a prefix shown in Table 13 and an AS is accurate. Specifically, the network device queries, based on the identifier of the AS 2 and the prefix P3, the relationship that is between the prefix P3 and the AS 2 and that is recorded in the IRR database, and an obtained query result indicates that the prefix P3 belongs to the AS 2. The network device queries, based on the identifier of the AS 5 and the prefix P5, the relationship that is between the AS 5 and the prefix P5 and that is recorded in the IRR database, and an obtained query result indicates that the prefix P5 does not belong to the AS 5 but belongs to another AS.

The network device queries, based on the identifier of the AS 6 and the prefix P6, the relationship that is between the AS 6 and the prefix P6 and that is recorded in the IRR database, and an obtained query result indicates that the prefix P6 belongs to the AS 6. The network device queries, based on the identifier of the AS 8 and the prefix P8, the relationship that is between the AS 8 and the prefix P8 and that is recorded in the IRR database, and finds no description about a belonging AS of the prefix P8.

**Table 15**

| ROA database | | |
|---|---|---|
| AS identifier | Prefix | IRR query result |
| AS 2 | P3 | It is determined that the prefix P3 belongs to the AS 2 |
| AS 5 | P5 | It is determined that the prefix P5 does not belong to the AS 5 but belongs to another AS |
| AS 6 | P6 | It is determined that the prefix P6 belongs to the AS 6 |
| AS 8 | P8 | No description about the belonging AS of the prefix P8 |

Step S343c: Correct the first prefix set based on the query result obtained from the IRR database, to obtain the second prefix set.

The following uses logic of determining whether to retain the first prefix in the first prefix set as an example for description, and logic of determining whether to retain another prefix in the first prefix set is similar. The first prefix is a prefix obtained by querying the first ROA database based on the third AS.

Case 1: The relationship that is between the first prefix and the third AS and that is obtained from the IRR database is an belonging relationship.

Case 1 is equivalent to that the ROA database and the IRR database have consistent descriptions about the relationship between the first prefix and the second prefix. Both the ROA database and the IRR database confirm that the first prefix and the third AS have the belonging relationship. In case 1, it is determined that the first prefix is an appropriate prefix in the prefix set, and the first prefix is retained, so that the second prefix set still includes the first prefix.

Case 2: The relationship that is between the first prefix and the third AS and that is obtained from the IRR database is not the belonging relationship.

For example, the IRR database records that the first prefix does not belong to the third AS but belongs to the second AS.

Case 2 is equivalent to that the ROA database and the IRR database have different descriptions about the relationship between the first prefix and the third AS. The ROA database confirms that the first prefix and the third AS have the belonging relationship, but the IRR database denies that the first prefix and the third AS have the belonging relationship. In case 2, the IRR database may be preferentially trusted, and the first prefix is deleted from the first prefix set, so that the second prefix set does not include the first prefix; or the ROA database may be preferentially trusted, and the first prefix is retained, so that the obtained second prefix set still includes the first prefix. For example, a policy is configured on the network device. In case 2, whether to delete the first prefix from the first prefix set is determined based on the policy.

Case 3: The IRR database has no description about the relationship between the first prefix and the second prefix.

In case 3, the first prefix may be deleted from the first prefix set, so that the obtained second prefix set does not include the first prefix; or the first prefix may be retained, so that the obtained second prefix set still includes the first prefix. For example, a policy is configured on the network device. In case 3, whether to delete the first prefix from the first prefix set is determined based on the policy.

In a possible implementation, the policy includes a priority of the IRR database and a priority of the ROA database, and the network device determines, based on the priority of the IRR database and the priority of the ROA database, whether to delete the first prefix from the first prefix set. For example, if the priority of the IRR database is higher than the priority of the ROA database, the network device deletes the first prefix from the first prefix set. If the priority of the IRR database is lower than the priority of the ROA database, the network device retains the first prefix in the first prefix set.

In a specific example, the network device located in the AS 4 obtains the prefix set {P3 P5 P6 P8} of the AS 3 from the ROA database. A specific query result is shown in Table 13. Table 15 shows the query result obtained from the IRR database through each prefix in the prefix set {P3 P5 P6 P8}. The belonging relationship between the prefix P3 and the AS 2 is reconfirmed through the IRR data. Therefore, the prefix P3 continues to be retained in the prefix set of the customer cone of the AS 3. The belonging relationship between the prefix P6 and the AS 6 is reconfirmed through the IRR data. Therefore, the prefix P6 continues to be retained in the prefix set of the customer cone of the AS 3. The IRR data determines that the prefix P5 does not belong to the prefix of the AS 5, and the network device may determine, based on the policy, whether the prefix P5 should be retained in the prefix set of the customer cone of the AS 3. An AS to which the prefix P8 belongs is not found in the IRR data, and the network device may determine, based on the policy, whether the prefix P8 should be retained in the prefix set of the customer cone of the AS 3.

The foregoing policy includes, for example, the following policy 1 or policy 2.

Policy 1: If the relationship that is between the first prefix and the third AS and that is obtained from the IRR database is an belonging relationship, the first prefix in the first prefix set is retained. If the relationship that is between the first prefix and the third AS and that is obtained from the IRR database is not the belonging relationship, the first prefix is deleted from the first prefix set. If the IRR database has no description about the relationship between the first prefix and the third AS, the first prefix is deleted from the first prefix set. For example, the first prefix set is {P3 P5 P6 P8}, and the query result obtained from the IRR database is shown in Table 15. The IRR database has a record that the prefix P3 and the AS 2 have the belonging relationship, has a record that the prefix P6 and the AS 6 have the belonging relationship, has a record that the prefix P5 and an AS other than the AS 5 has an belonging relationship (equivalent to explicitly denying an belonging relationship between the prefix P5 and the AS 5), and has no record that the prefix P8 and the AS 8 have an belonging relationship (equivalent to no record). Therefore, the network device retains the prefix P3 and the prefix P6, and deletes the prefix P5 and the prefix P8, to obtain a prefix set {P3 P6} of the prefix 3.

Policy 2: If the relationship that is between the first prefix and the third AS and that is obtained from the IRR database is an belonging relationship, the first prefix in the first prefix set is retained. If the relationship that is between the first prefix and the third AS and that is obtained from the IRR database is not the belonging relationship, the first prefix is deleted from the first prefix set. If the IRR database has no description about the relationship between the first prefix and the third AS, the first prefix in the first prefix set is retained. For example, the first prefix set is {P3 P5 P6 P8}, and the query result obtained from the IRR database is shown in Table 15. The IRR database has a record that the prefix P3 and the AS 2 have the belonging relationship, has a record that the prefix P6 and the AS 6 have the belonging relationship, has a record that the prefix P5 and an AS other than the AS 5 has an belonging relationship (equivalent to explicitly denying an belonging relationship between the prefix P5 and the AS 5), and has no record that the prefix P8 and the AS 8 have an belonging relationship (equivalent to no record). Therefore, the network device retains the prefix P3, the prefix P6, and the prefix P8, and deletes the prefix P5, to obtain a prefix set {P3 P6 P8} of the prefix 3.

In the method provided in this embodiment, the IRR database is introduced to correct the prefix set obtained based on the ROA database. Compared with the ROA database, the IRR database is deployed earlier and more mature. Currently, the IRR database has a larger data volume of registration than the ROA database, and the IRR database records more prefix relationships. Therefore, the IRR database is used as a data source for correcting the prefix set, and this helps reduce impact caused by insufficient data volume of registration in the ROA database, thereby improving accuracy of the prefix set to some extent, and reducing the probability of errors occurring in the subsequent source address validation process.

The foregoing embodiment focuses on introducing the IRR database to correct the prefix set obtained based on the ROA database. In another possible implementation, the ROA database is introduced to correct the prefix set obtained based on the IRR database. The following uses Embodiment 4-b as an example for description. Embodiment 4-b is equivalent to replacing the IRR database in Embodiment 4-a with the ROA database. For implementation details of each step in Embodiment 4-b, refer to Embodiment 4-a.

### Embodiment 4-b

Step S341a: Obtain the first prefix set of the customer cone of the first AS based on the IRR database.

Step S342b: Obtain a relationship between an AS in the customer cone and a prefix in the first prefix set based on the ROA database, the customer cone, and the first prefix set.

Step S343c: Correct the first prefix set based on the relationship that is between the AS and the prefix and that is obtained from the ROA database, to obtain the second prefix set.

For example, if the ROA data records that the first prefix belongs to the third AS, the first prefix is retained, so that the second prefix set includes the first prefix. If the ROA data records that the first prefix does not belong to the third AS, the first prefix is deleted, so that the second prefix set does not include the first prefix. If the ROA data does not record an AS to which the first prefix belongs, whether to delete the first prefix is determined based on a priority relationship between the IRR data and the ROA data.

In the method provided in this embodiment, the ROA database is introduced to correct the prefix set obtained based on the IRR database. Because the IRR database is registered by an operator of each AS, accuracy of data in the IRR database is ensured by the operator. The ROA database performs centralized management based on an RPKI. A registration and authentication process of the ROA database is stricter than that of the IRR database. Therefore, the ROA database is used as a data source for correcting the prefix set, and this helps reduce negative impact caused on accuracy when the IRR database is registered by an operator, thereby improving accuracy of the prefix set to some extent, and reducing the probability of errors occurring in the subsequent source address validation process.

In conclusion, in Embodiment 4-a and Embodiment 4-b, because a prefix set is obtained based on a plurality of available data sources (the ROA database and the IRR database), a disadvantage caused by a prefix set obtained by a single data source is made up to some extent, and accuracy of the prefix set is improved.

Further, based on the more accurate prefix set, the more accurate source address validation entry can be obtained, thereby improving accuracy of source address validation, and reducing a security risk caused by a source address attack initiated by an attacker.

The following uses Embodiment 5 to further describe in detail the process of obtaining the source address validation entry in step S38.

### Embodiment 5

The process of obtaining the source address validation entry in step S38 may be performed by the network device, or may be performed by the control device, or may be performed by the network device and the control device in collaboration. The following separately describes the three manners by using examples.

Manner 1 of obtaining the source address validation entry: The network device performs the process of obtaining the customer cone of the first AS in step S32 and the process of obtaining the prefix set of the customer cone described in step S34; and the network device determines an interface that is on this device and that is connected to the first AS. The network device determines the interface that is on this device and that is connected to the first AS; and the network device obtains the source address validation entry based on the interface that is on the network device and that is connected to the first AS and the prefix set.

The network device may perform step S32 in the manner provided in Embodiment 1-a; or the network device may perform step S32 in the manner provided in Embodiment 1-b; or the network device may perform step S32 in both the manner provided in Embodiment 1-a and the manner provided in Embodiment 1-b.

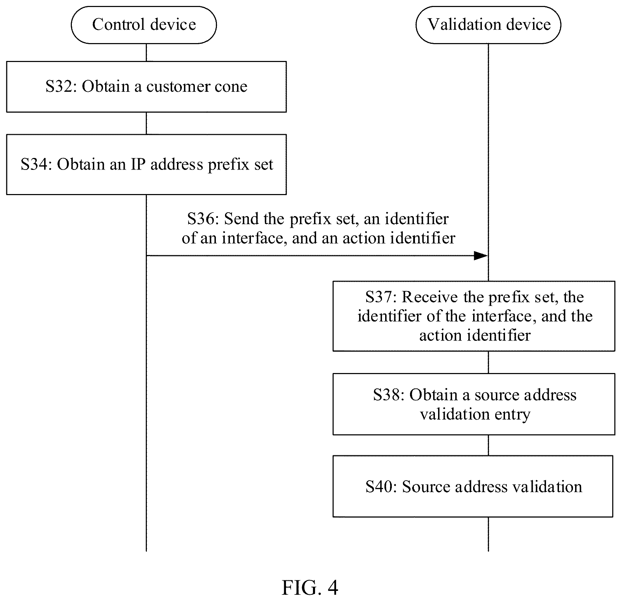

Manner 2 of obtaining the source address validation entry: The control device performs the foregoing described process of obtaining the customer cone of the first AS and the foregoing described process of obtaining the prefix set of the customer cone; and the control device determines an interface that is on this device and that is connected to the first AS. The control device determines, based on the network topology, the interface that is on the network device and that is connected to the first AS. As shown in FIG. 4, the control device performs step S36 to send, to the network device, a prefix set, an identifier of the interface that is on the network device and that is connected to the first AS, and an action identifier. The network device performs step S37 to receive the prefix set, the identifier of the interface, and the action identifier from the control device. The network device obtains the source address validation entry based on the prefix set, the identifier of the interface, and the action identifier.

The action identifier indicates to generate the source address validation entry. A data form of the action identifier is, for example, a number or a character string. For example, different numbers are used to represent different actions, and a protocol specifies an action represented by each number.

The control device may perform step S32 in the manner provided in Embodiment 1-a; or the control device may perform step S32 in the manner provided in Embodiment 1-b; or the control device may perform step S32 in both the manner provided in Embodiment 1-a and the manner provided in Embodiment 1-b.

In a possible implementation, the control device obtains a first protocol packet based on the prefix set, the identifier of the interface, and the action identifier. The control device sends the first protocol packet to the network device. The first protocol packet includes the prefix set, the identifier of the interface, and the action identifier. The network device receives the first protocol packet, and the network device obtains the prefix set, the identifier of the interface, and the action identifier from the first protocol packet.

The first protocol packet may be any control plane protocol packet or management plane protocol packet. For example, the first protocol packet is a BGP packet or a PCEP packet. For example, the first protocol packet is a border gateway protocol flow specification (border gateway protocol flow spec, BGP flow specification, BGP flow spec or BGP F S for short) packet.

For a packet format of the first protocol packet, in a possible implementation, the first protocol packet includes a first type-length-value (type-length-value, TLV), a second TLV, and a third TLV. The first TLV includes the identifier of the interface that is on the network device and that is connected to the first AS. The second TLV includes an IP address prefix. The IP address prefix included in the second TLV is, for example, a prefix in the prefix set determined by using the foregoing method embodiment. The third TLV includes the action identifier.

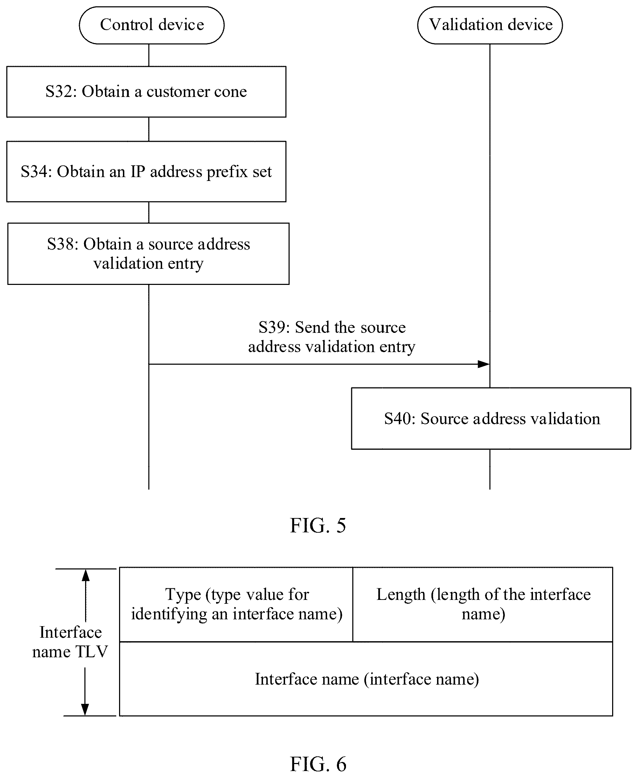

The first TLV is, for example, an interface name TLV (interface name TLV). The interface name TLV is a TLV for carrying an interface name. Refer to FIG. 6. FIG. 6 is a diagram of a format of the interface name TLV. The interface name TLV includes a type field, a length field, and an interface name (interface name) field. The type field includes a type value for identifying the interface name. The length field includes a length of the interface name or a length of the entire interface name TLV. The interface name field includes the interface name. The length of the interface name field is variable.

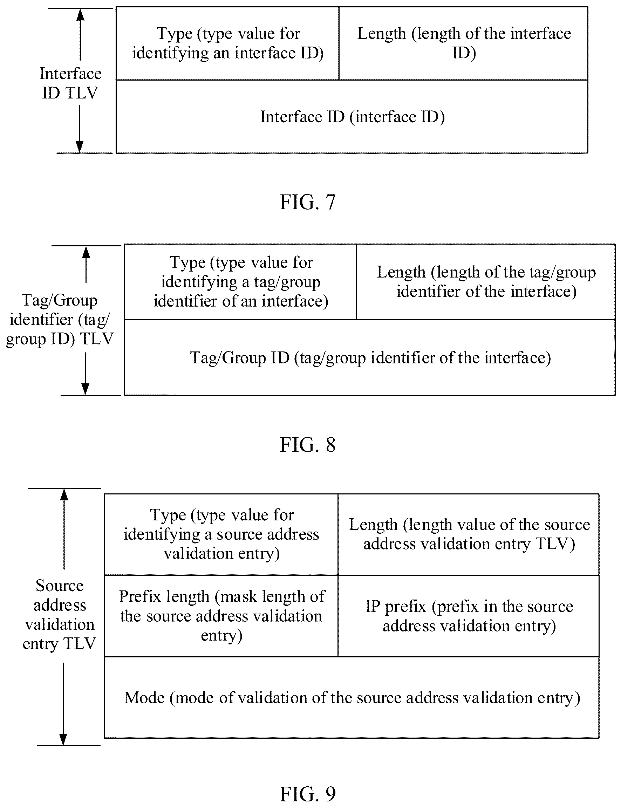

The first TLV is, for another example, an interface ID TLV (interface ID TLV). Refer to FIG. 7. FIG. 7 is a diagram of a format of the interface ID TLV. The interface ID TLV includes a type field, a length field, and an interface ID (interface ID) field. The type field includes a type value for identifying an interface ID. The length field includes a length value of the interface ID TLV. The interface ID field includes the interface ID. A length of the interface ID field is, for example, 4 bytes.

The first TLV is, for another example, a tag/group ID TLV. Refer to FIG. 8. FIG. 8 is a diagram of a format of the tag/group ID TLV. The tag/group ID TLV includes a type field, a length field, and a tag/group ID field. The type field includes a type value for identifying a tag/group identifier. The length field includes a length value of the tag/group identifier TLV. The tag/group ID field includes the tag/group identifier.

The second TLV includes, for example, one or more address prefix units. Each address prefix unit includes an IP address prefix and a length of the IP address prefix. For example, the second TLV is a source address validation entry TLV. Refer to FIG. 9. FIG. 9 is a diagram of a format of the source address validation entry TLV. The first protocol packet includes the source address validation entry TLV shown in FIG. 9. The source address validation entry TLV includes a type field, a length field, a prefix length field, an IP prefix field, and a mode field. The type field includes a type value for identifying the source address validation entry. The type value in the type field is, for example, an action identifier. The length field includes a length value of the source address validation entry TLV. The prefix length field includes a mask length of the source address validation entry. The IP prefix field includes a prefix in the source address validation entry. The mode field includes a mode of validation of the source address validation entry. The mode of source address validation includes but is not limited to allowlist validation, blocklist validation, and greylist validation.

The third TLV is, for example, an extended community attribute. For example, a type value in a type field in the third TLV indicates to generate the source address validation entry, and the type value in the type field in the third TLV is an action identifier.

In a possible implementation, the IP address prefix and the action identifier are separately carried by using two TLVs. For example, the second TLV and the third TLV are two different TLVs. In another possible implementation, the IP address prefix and the action identifier are carried by using a same TLV. For example, the second TLV and the third TLV are a same TLV. For example, a type value in a type field of a TLV indicates to generate the source address validation entry, and a value field of the TLV carries the IP address prefix.

For the manner of sending the interface identifier, the IP address prefix, and the action identifier through BGP FS, in a possible implementation, the first protocol packet is a BGP FS packet, and the BGP FS packet includes an NLRI field, a first extended community attribute, and a second extended community attribute. The NLRI field includes the IP address prefix. The network layer reachability information (network layer reachability information, NLRI) field is, for example, a specific example of the second TLV. The first extended community attribute includes the identifier of the interface. The second extended community attribute includes the action identifier.

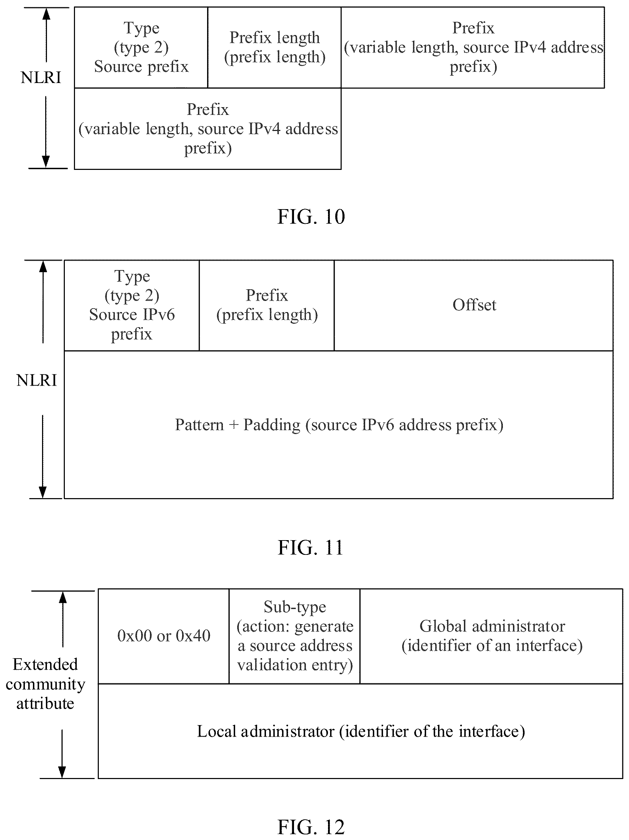

A format of the NLRI field is described by using an example. Refer to FIG. 10. FIG. 10 is a diagram of a format of an NLRI field according to an embodiment of this application. The NLRI field in FIG. 10 is used to carry a source IPv4 address prefix. The NLRI field includes a type field, a prefix length (prefix length) field, and a prefix field. A value of the type field is type 2, where the type 2 identifies a source prefix (source prefix), the prefix field is used to carry the source IPv4 address prefix, and the prefix length field indicates a length of the source IPv4 address prefix carried in the prefix field. For another example, refer to FIG. 11. FIG. 11 is a diagram of a format of an NLRI field according to an embodiment of this application. The NLRI field shown in FIG. 11 is used to carry a source IPv6 address prefix. The NLRI field includes a type field, a prefix length (prefix length) field, an offset (offset) field, a pattern (pattern) field, and a padding (padding) field. A value of the type field is type 2, where the type 2 identifies a source IPv6 prefix (source IPv6 prefix), the pattern field and the padding field are used to carry the source IPv6 address prefix, and the prefix length field indicates a length of the source IPv6 address prefix carried in the pattern field and the padding field.

A format of an extended community attribute field is described by using an example. Refer to FIG. 12. FIG. 12 is a diagram of the format of the extended community attribute field according to an embodiment of this application. The community attribute field includes a sub-type field, a global administrator (global administrator) field, and a local administrator (local administrator) field. In a possible implementation, a value of a type in the sub-type field is the action identifier. In another possible implementation, the global administrator field or the local administrator field includes the action identifier.

In another possible implementation, the identifier of the interface and the action identifier are carried by using the same extended community attribute. For example, the BGP FS packet includes the network layer reachability information (network layer reachability information, NLRI) field and the extended community attribute field. The NLRI field includes the IP address prefix. The extended community attribute field includes the identifier of the interface and the action identifier. For example, the value of the type in the sub-type field in the extended community attribute field is the action identifier. The global administrator field or the local administrator field includes the identifier of the interface.

In the foregoing implementation, the control device sends the prefix set, the identifier of the interface, and the action identifier by using a same protocol packet. In another possible implementation, the control device separately sends the prefix set, the identifier of the interface, and the action identifier by using different protocol packets. For example, the control device sends a protocol packet A and a protocol packet B to the network device. The protocol packet A includes the prefix set and the action identifier. The protocol packet B includes the identifier of the interface and the action identifier. The network device receives the protocol packet A and the protocol packet B. The network device obtains the prefix set and the action identifier from the protocol packet A. The network device obtains the identifier of the interface and the action identifier from the protocol packet B. The network device determines, based on the action identifier, that a correspondence exists between the prefix set obtained from the protocol packet A and the identifier that is of the interface and that is obtained from the protocol packet B.

Manner 3 of obtaining the source address validation entry: The control device performs the foregoing described process of obtaining the customer cone of the first AS and the foregoing described process of obtaining the prefix set of the customer cone; and the control device determines an interface that is on this device and that is connected to the first AS. The control device determines, based on the network topology, the interface that is on the network device and that is connected to the first AS; and the control device obtains the source address validation entry based on the interface that is on the network device and that is connected to the first AS and the prefix set.

In a possible implementation, as shown in FIG. 5, the control device performs step S39 to send the obtained source address validation entry to the network device. The network device receives the source address validation entry sent by the control device, so as to perform step S40 based on the source address validation entry.

In the foregoing three obtaining manners, when obtaining the source address validation entry, the network device or the controller may generate one or more source address validation entries by using an interface as a granularity. For example, the network device has a first interface and a second interface, the first interface is connected to the first AS, and the second interface is also connected to the first AS. The network device generates a first source address validation entry and a second source address validation entry based on the first interface, the second interface, and the prefix set, where the first source address validation entry includes the first interface and the prefix set, and the second source address validation entry includes the second interface and the prefix set.

In a possible implementation, the control device sends the second protocol packet to the network device. The second protocol packet includes the source address validation entry. The network device receives the second protocol packet, and obtains the source address validation entry from the second protocol packet.

The second protocol packet may be any control plane protocol packet or management plane protocol packet. For example, the second protocol packet is a BGP packet or a PCEP packet. For example, the second protocol packet is a BGP FS packet.

In a possible implementation, the first protocol packet includes an address family identifier, and the address family identifier indicates the source address validation entry. The first protocol packet can carry the address family identifier to indicate that the first protocol packet includes the source address validation entry, so that the device can distinguish between the first protocol packet and a protocol packet carrying other content.

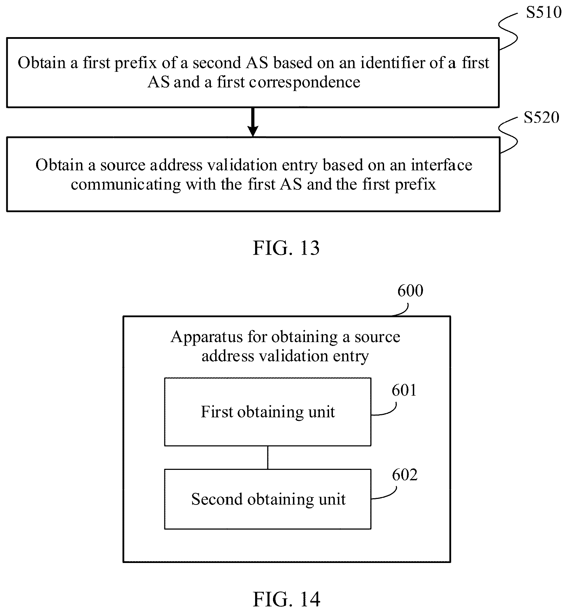

FIG. 13 is a flowchart of a method for obtaining a source address validation entry according to an embodiment of this application.

Optionally, a network deployment scenario on which the method shown in FIG. 13 is based is shown in FIG. 1. For example, refer to FIG. 1. The method shown in FIG. 13 is performed by the router R2 located at the edge of the AS 4 in FIG. 1, the first AS in the method shown in FIG. 13 is the AS 3 in FIG. 1, and the interface for communicating with the first AS in the method shown in FIG. 13 is the interface a in FIG. 1. The second AS in the method shown in FIG. 13 is, for example, the AS 1 in FIG. 1. The second AS is also, for example, the AS 2 in FIG. 1, and the first prefix is, for example, the P3 in FIG. 1. The second AS is also, for example, the AS 5 in FIG. 1, and the first prefix is, for example, the P5 in FIG. 1. The second AS is also, for example, the AS 6 in FIG. 1, and the first prefix is, for example, the P6 in FIG. 1. The second AS is also, for example, the AS 7 in FIG. 1, and the first prefix is, for example, the P7 in FIG. 1. The second AS is also, for example, the AS 8 in FIG. 1, and the first prefix is, for example, the P8 in FIG. 1.

Optionally, with reference to FIG. 3, in the method shown in FIG. 13, the first AS is the validated AS in the embodiment in FIG. 3, the second AS in the method shown in FIG. 13 is the AS in the customer cone in the embodiment in FIG. 3, the first prefix in the method shown in FIG. 13 is the prefix included in the prefix set in the embodiment in FIG. 3, and the interface for communicating with the first AS in the method shown in FIG. 13 is the interface that is connected to the validated AS in the embodiment in FIG. 3. The method shown in FIG. 13 includes the following S510 to S520.

S510: Obtain a first prefix of the second AS based on an identifier of the first AS and a first correspondence. The first correspondence includes the identifier of the first AS, an identifier of the second AS, and a first valid relationship.

The second AS is located downstream of the first AS. For example, the second AS is a next-hop AS of the first AS. For example, the second AS is a customer AS of the first AS. For example, the second AS is an AS in a customer cone of the first AS. For example, the identifier of the first AS is an index based on which the first correspondence is searched for. The first correspondence is, for example, an entry in a database.

S520: Obtain a source address validation entry based on an interface communicating with the first AS and the first prefix, where the source address validation entry includes the first prefix and an identifier of the interface.

Through the foregoing method, the prefix is obtained by using the valid relationship between the ASs, so that an error caused by an invalid relationship between the ASs to the prefix obtaining process is reduced, thereby improving accuracy of the prefix, and further improving accuracy of the source address validation entry obtained based on the prefix.

In a possible implementation, the first valid relationship is that a region corresponding to a relationship between two ASs that are upstream and downstream to each other matches a region corresponding to a customer cone, and the customer cone includes the two ASs that are upstream and downstream to each other.

For example, the first valid relationship is that the region corresponding to the relationship between the two ASs that are upstream and downstream to each other is the same as the region corresponding to the customer cone. For example, refer to the foregoing Table 11. The AS 6 and the AS 1 are specific examples of the two ASs that are upstream and downstream to each other. A region corresponding to a relationship between the AS 6 and the AS 1 is Europe, and a region corresponding to a customer cone of the AS 3 is also Europe. The relationship between the AS 6 and the AS 1 may be defined as the first valid relationship. For another example, the first valid relationship is that the region corresponding to the relationship between the two ASs that are upstream and downstream to each other belongs to a coverage range of the region corresponding to the customer cone. For example, refer to the foregoing Table 11. A region corresponding to a relationship between the AS 6 and the AS 1 is Europe, a region corresponding to a customer cone of the AS 3 is globe, and Europe belongs to a coverage range of the globe. The relationship between the AS 6 and the AS 1 may be defined as the first valid relationship. For another example, the first valid relationship is that a coverage range of the region corresponding to the relationship between the two ASs that are upstream and downstream to each other includes the region corresponding to the customer cone. For example, a region corresponding to a relationship between the AS 6 and the AS 1 is globe, and a region corresponding to a customer cone of the AS 3 is Europe. The relationship between the AS 6 and the AS 1 may be defined as the first valid relationship. For another example, the first valid relationship is that the region corresponding to the relationship between the two ASs that are upstream and downstream to each other does not conflict with the region corresponding to the customer cone. On the contrary, if the region corresponding to the relationship between the two ASs that are upstream and downstream to each other does not match the region corresponding to the customer cone, or the region corresponding to the relationship between the two ASs that are upstream and downstream to each other conflicts with the region corresponding to the customer cone, it may be determined that the two ASs that are upstream and downstream to each other do not have the first valid relationship, and a prefix of the AS whose region does not match may be deleted. For example, the region corresponding to the relationship between the AS 6 and the AS 1 is Europe, and the region corresponding to the customer cone of the AS 3 is Asia. It may be determined that the AS 6 and the AS 1 do not have the first valid relationship. In the foregoing manner, validity of the relationship between the ASs can be validated based on whether the regions match.

In a possible implementation, before obtaining the first prefix of the second AS based on the identifier of the first AS and the first correspondence, the method further includes: determining, based on matching between a region corresponding to the first AS and a valid region corresponding to a relationship between the first AS and the second AS, that the first AS and the second AS have the first valid relationship.

For technical details of determining the first valid relationship based on matching of the regions, refer to the descriptions in Embodiment 1-a and Embodiment 1-b in this specification.

In the foregoing implementation, validity of the relationship between the ASs is determined based on a matching feature of the regions, and the prefix is obtained by using the ASs with matching regions, so that an error caused to the prefix obtaining process by an AS whose region does not meet a requirement is eliminated as much as possible, and it is avoided that a prefix of the AS without the matching region is incorrectly classified into a prefix set, thereby improving accuracy of the prefix, and further improving accuracy of the source address validation entry obtained based on the prefix.

In a possible implementation, the first valid relationship is a relationship between ASs on which validation performed based on a plurality of databases succeeds, and the plurality of databases are different in at least one of the following: a registration quantity, deployment time, a digital signature, and certificate authentication.

The foregoing plurality of databases include but are not limited to the ASPA database and the IRR database, and certainly may be alternatively other available databases. For example, the first valid relationship is a relationship between ASs on which validation performed based on the ASPA database and the IRR database succeeds. For example, refer to the foregoing Table 12. The AS 5 and the AS 1 in the ASPA database have the C2P relationship, and the AS 5 and the AS 1 in the IRR database also have the C2P relationship. The relationship between the AS 5 and the AS 1 may be defined as the first valid relationship. For another example, if the AS 6 and the AS 1 in the ASPA database have the C2P relationship, and the AS 6 and the AS 1 in the IRR database do not have the C2P relationship, it may be determined that the AS 6 and the AS 1 do not have the first valid relationship. In the foregoing manner, the validity of the relationship between the ASs can be validated in combination with the plurality of databases, thereby further improving reliability of utilization in the process of obtaining the source address validation entry.

In a possible implementation, before obtaining the first prefix of the second AS based on the identifier of the first AS and the first correspondence, the method further includes: determining, based on matching between a second correspondence and a third correspondence, that the first AS and the second AS have the first valid relationship, where the second correspondence includes the identifier of the first AS, the identifier of the second AS, and a relationship between the first AS and the second AS, and the third correspondence includes the identifier of the first AS, the identifier of the second AS, and a relationship between the first AS and the second AS. For example, the second correspondence is an entry in the first database, the third correspondence is an entry in the second database, and the first database and the second database are different in at least one of the following: a registration quantity, deployment time, a digital signature, and certificate authentication. For example, the second correspondence is an entry in the ASPA database, and the third correspondence is an entry in the IRR database. For example, the second correspondence is an entry in Table 10, and the third correspondence is an entry that is in another database and whose format is similar to that of the entry in Table 10. The second correspondence matches the third correspondence. For example, the relationship between the first AS and the second AS in the second correspondence is the same as the relationship between the first AS and the second AS in the third correspondence. For example, a relationship between the second AS and the first AS in the second correspondence is a C2P relationship, and a relationship between the second AS and the first AS in the third correspondence is also a C2P relationship. In this case, it is determined that the second correspondence matches the third correspondence, and the C2P relationship between the second AS and the first AS is valid. The second correspondence matches the third correspondence. For another example, the relationship between the first AS and the second AS exists in the second correspondence, but the relationship between the first AS and the second AS is not found in the third correspondence. Alternatively, that the second correspondence matches the third correspondence is that the relationship between the first AS and the second AS is not found in the second correspondence, but the relationship between the first AS and the second AS exists in the third correspondence. In this case, considering that a relationship between some ASs is not described because a data amount in a database is incomplete, it may be determined that data describing the relationship is reliable.

For technical details of determining the first valid relationship based on matching of the plurality of databases, refer to the descriptions in Embodiment 2-a and Embodiment 2-b in this specification.

In the foregoing implementation, validity of the relationship between the ASs is validated based on a plurality of databases, and the prefix is obtained by using the ASs validated by the plurality of databases, so that an error caused by an AS that does not match a region to a prefix obtaining process is eliminated as much as possible, thereby improving accuracy of the prefix, and further improving accuracy of a source address validation entry obtained based on the prefix.

In a possible implementation, the second correspondence is obtained by searching an autonomous system provider authorization ASPA database for a downstream AS based on the identifier of the first AS, and the third correspondence is obtained by searching an internet routing registry IRR database for a downstream AS based on the identifier of the first AS; or the second correspondence is obtained by searching an autonomous system provider authorization ASPA database for an upstream AS based on the identifier of the second AS, and the third correspondence is obtained by searching an internet routing registry IRR database for an upstream AS based on the identifier of the second AS.

In a possible implementation, obtaining the first prefix of the second AS based on the identifier of the first AS and the first correspondence includes: obtaining the identifier of the second AS based on the identifier of the first AS and the first correspondence; and obtaining the first prefix based on the identifier of the second AS and a fourth correspondence, where the fourth correspondence includes the identifier of the second AS, the first prefix, and a second valid relationship. In the foregoing manner, the prefix is obtained by using the valid relationship between the AS and the prefix, so that an error caused by an invalid relationship between the AS and the prefix to the prefix obtaining process is reduced, thereby improving accuracy of the prefix, and further improving accuracy of the source address validation entry obtained based on the prefix.

In a possible implementation, the second valid relationship is that a region corresponding to a relationship between a prefix and an AS to which the prefix belongs matches a region corresponding to a customer cone, and the customer cone includes the AS to which the prefix belongs. For example, the second valid relationship is that a region corresponding to a relationship between a prefix and an AS to which the prefix belongs is the same as a region corresponding to a customer cone. For example, refer to the foregoing Table 14. The prefix P3 and the AS 2 are specific examples of the relationship between the prefix and the AS to which the prefix belongs. The region corresponding to the relationship between the prefix P3 and the AS 2 is Europe, and the region corresponding to the customer cone of the AS 3 is also Europe. The relationship between the prefix P3 and the AS 2 may be defined as the second valid relationship. For another example, the second valid relationship is that a region corresponding to a relationship between a prefix and an AS to which the prefix belongs belongs to a coverage range of the region corresponding to the customer cone. For example, refer to the foregoing Table 11. The region corresponding to the relationship between the prefix P3 and the AS 2 is Europe, the region corresponding to the customer cone of the AS 3 is globe, and Europe is in a coverage range of the globe. The relationship between the prefix P3 and the AS 2 may be defined as the second valid relationship. For another example, the second valid relationship is that a coverage range of the region corresponding to the relationship between the prefix and the AS to which the prefix belongs includes the region corresponding to the customer cone. For example, the region corresponding to the relationship between the prefix P3 and the AS 2 is globe, the region corresponding to the customer cone of the AS 3 is Europe, and a range of the globe covers Europe. The relationship between the prefix P3 and the AS 2 may be defined as the second valid relationship.

On the contrary, if the region corresponding to the relationship between the prefix and the AS to which the prefix belongs does not match the region corresponding to the customer cone, it may be determined that the prefix and the AS to which the prefix belongs do not have the second valid relationship. For example, the region corresponding to the relationship between the prefix P3 and the AS 2 is Europe, and the region corresponding to the customer cone of the AS 3 is Asia. It may be determined that the prefix P3 and the AS 2 do not have the second valid relationship.

In the foregoing implementation, validity of the relationship between the AS and the prefix is determined based on a matching feature of the regions, so that an error caused to the prefix obtaining process by a prefix whose region does not meet a requirement is eliminated as much as possible, and it is avoided that the prefix whose region does not meet the requirement is incorrectly classified into a prefix set, thereby improving accuracy of the prefix set.

In a possible implementation, before obtaining the first prefix based on the identifier of the second AS and the fourth correspondence, the method further includes: determining, based on matching between a region corresponding to the second AS and a valid region corresponding to a relationship between the second AS and the first prefix, that the second AS and the first prefix have the second valid relationship.

In a possible implementation, the second valid relationship is a relationship between an AS and a prefix on which validation performed based on a plurality of databases succeeds, and the plurality of databases are different in at least one of the following: a registration quantity, deployment time, a digital signature, and certificate authentication. For example, the second valid relationship is a relationship between an AS and a prefix on which validation performed based on the ROA database and the IRR database succeeds. For example, refer to the foregoing Table 15. The prefix P3 and the AS 2 in the ROA database have the belonging relationship, and the prefix P3 and the AS 2 in the IRR database also have the belonging relationship. The relationship between the prefix P3 and the AS 2 may be defined as the second valid relationship. For another example, the prefix P5 and the AS 5 in the ROA database have the belonging relationship, the prefix P5 and the AS 5 in the IRR database do not have the belonging relationship, and the prefix P5 and an AS other than the AS 5 in the IRR database have the belonging relationship. It may be determined that the prefix P5 and the AS 5 do not have the second valid relationship.

For technical details of determining the second valid relationship based on matching of the regions, refer to the descriptions in Embodiment 3-a and Embodiment 3-b in this specification.

In the foregoing manner, validity of the relationship between the AS and the prefix can be validated based on whether validation of all the plurality of databases succeeds.

In a possible implementation, before obtaining the first prefix based on the identifier of the second AS and the fourth correspondence, the method further includes: determining, based on matching between a fifth correspondence and a sixth correspondence, that the second AS and the first prefix have the second valid relationship, where the fifth correspondence includes the identifier of the second AS, the first prefix, and a relationship between the second AS and the first prefix, and the sixth correspondence includes the identifier of the second AS, the first prefix, and a relationship between the second AS and the first prefix. For example, the fifth correspondence is an entry in the first database, the sixth correspondence is an entry in the second database, and the first database and the second database are different in at least one of the following: a registration quantity, deployment time, a digital signature, and certificate authentication. For example, the first database is an ROA database, and the second database is an IRR database. For example, the fifth correspondence is an entry in Table 13, and the sixth correspondence is an entry that is in another database and whose format is similar to that of the entry in Table 13. The fifth correspondence matches the sixth correspondence. For example, the relationship between the second AS and the first prefix in the fifth correspondence is the same as the relationship between the second AS and the first prefix in the sixth correspondence. For example, a relationship between the second AS and the first prefix in the fifth correspondence is an belonging relationship, and a relationship between the second AS and the first prefix in the sixth correspondence is also an belonging relationship. In this case, it is determined that the fifth correspondence matches the sixth correspondence, and the belonging relationship between the second AS and the first prefix is valid. The fifth correspondence matches the sixth correspondence. For another example, the relationship between the second AS and the first prefix exists in the fifth correspondence, but the relationship between the second AS and the first prefix is not found in the sixth correspondence. Alternatively, that the fifth correspondence matches the sixth correspondence is that the relationship between the second AS and the first prefix is not found in the fifth correspondence, but the relationship between the second AS and the first prefix exists in the sixth correspondence. In this case, considering that a relationship between some prefixes and ASs is not described because a data amount in a database is incomplete, it may be determined that data describing the relationship is reliable.

For technical details of determining the second valid relationship based on matching of the plurality of databases, refer to the descriptions in Embodiment 4-a and Embodiment 4-b in this specification.

In the foregoing implementation, validity of the relationship between the AS and the prefix is validated based on a plurality of databases, thereby improving accuracy of the prefix, and further improving accuracy of the source address validation entry obtained based on the prefix.

In a possible implementation, the fifth correspondence is obtained by searching an ROA database for a prefix based on the identifier of the second AS, and the sixth correspondence is obtained by searching an IRR database for a prefix based on the identifier of the second AS; or
the fifth correspondence is obtained by searching an ROA database for a belonging AS based on the first prefix, and the sixth correspondence is obtained by searching an IRR database for a belonging AS based on the first prefix.

In a possible implementation, the first correspondence includes a customer cone of the first AS, and the customer cone of the first AS includes the first AS and the second AS.

In a possible implementation, the method shown in FIG. 13 is performed by a network device. For example, the method shown in FIG. 13 is performed by a network device deployed at an edge of an AS. For example, the method shown in FIG. 13 is performed on an edge of the third AS, and the third AS is located upstream of the first AS.

In a possible implementation, the method shown in FIG. 13 is performed by a control device. After obtaining the source address validation entry based on the interface communicating with the first AS and the first prefix, the method shown in FIG. 13 further includes:
sending, by the control device, a protocol packet to a network device, where the network device includes the interface, the network device is located at an edge of a third AS, the third AS is located upstream of the first AS, and the protocol packet includes the source address validation entry.

For details about differences between methods performed by different execution bodies, refer to the description in Embodiment 5 of this specification.

In the foregoing implementation, the control device is supported to automatically deliver the source address validation entry to the network device.

In a possible implementation, the protocol packet is a border gateway protocol BGP packet or a path computation element protocol PCEP packet.

In a possible implementation, the protocol packet is a border gateway protocol flow specification BGP FS packet, the BGP FS packet includes a network layer reachability information NLRI field and an extended community attribute field, the NLRI field includes the first prefix, and the extended community attribute field includes the identifier of the interface.

For a format of the protocol packet, refer to descriptions in FIG. 6, FIG. 7, FIG. 8, FIG. 9, FIG. 10, FIG. 11, and FIG. 12.

FIG. 14 is a diagram of a structure of an apparatus for obtaining a source address validation entry according to an embodiment of this application. The apparatus 600 for obtaining the source address validation entry includes a first obtaining unit 601 and a second obtaining unit 602.

Optionally, with reference to the scenario shown in FIG. 1, the apparatus 600 shown in FIG. 14 is disposed in the router R2 located at the edge of the AS 4 shown in FIG. 1.

Optionally, with reference to the scenario shown in FIG. 2, the apparatus 600 shown in FIG. 14 is disposed in the router R2 shown in FIG. 2.

Optionally, with reference to FIG. 3, the apparatus 600 for obtaining the source address validation entry shown in FIG. 14 is configured to perform the method shown in FIG. 3.

Optionally, with reference to FIG. 4, the apparatus 600 for obtaining the source address validation entry shown in FIG. 14 is disposed in the control device in FIG. 4, and the apparatus 600 shown in FIG. 14 is configured to perform S32 to S36.

A first obtaining unit 601 is configured to obtain a first prefix of a second AS based on an identifier of a first AS and a first correspondence, where the first correspondence includes the identifier of the first AS, an identifier of the second AS, and a first valid relationship, and the second AS is located downstream of the first AS.

A second obtaining unit 602 is configured to obtain the source address validation entry based on an interface communicating with the first AS and the first prefix, where the source address validation entry includes the first prefix and an identifier of the interface.

In a possible implementation, the first valid relationship is that a region corresponding to a relationship between two ASs that are upstream and downstream to each other matches a region corresponding to a customer cone, and the customer cone includes the two ASs that are upstream and downstream to each other; or
the first valid relationship is a relationship between ASs on which validation performed based on a plurality of databases succeeds, and the plurality of databases are different in at least one of the following: a registration quantity, deployment time, a digital signature, and certificate authentication.

In a possible implementation, the apparatus 600 further includes:
a first determining unit, configured to determine, based on matching between a region corresponding to the first AS and a valid region corresponding to a relationship between the first AS and the second AS, that the first AS and the second AS have the first valid relationship.

In a possible implementation, the apparatus 600 further includes:
a second determining unit, configured to determine, based on matching between a second correspondence and a third correspondence, that the first AS and the second AS have the first valid relationship, where the second correspondence includes the identifier of the first AS, the identifier of the second AS, and a relationship between the first AS and the second AS, and the third correspondence includes the identifier of the first AS, the identifier of the second AS, and a relationship between the first AS and the second AS.

In a possible implementation, the second correspondence is obtained by searching an autonomous system provider authorization ASPA database for a downstream AS based on the identifier of the first AS, and the third correspondence is obtained by searching an internet routing registry IRR database for a downstream AS based on the identifier of the first AS; or
the second correspondence is obtained by searching an autonomous system provider authorization ASPA database for an upstream AS based on the identifier of the second AS, and the third correspondence is obtained by searching an internet routing registry IRR database for an upstream AS based on the identifier of the second AS.

In a possible implementation, the first obtaining unit 601 is configured to: obtain the identifier of the second AS based on the identifier of the first AS and the first correspondence; and obtain the first prefix based on the identifier of the second AS and a fourth correspondence, where the fourth correspondence includes the identifier of the second AS, the first prefix, and a second valid relationship.

In a possible implementation, the second valid relationship is that a region corresponding to a relationship between a prefix and an AS to which the prefix belongs matches a region corresponding to a customer cone, and the customer cone includes the AS to which the prefix belongs; or
the second valid relationship is a relationship between ASs on which validation performed based on a plurality of databases succeeds, and the plurality of databases are different in at least one of the following: a registration quantity, deployment time, a digital signature, and certificate authentication.

In a possible implementation, the apparatus 600 further includes: a third determining unit, configured to determine, based on matching between a region corresponding to the second AS and a valid region corresponding to a relationship between the second AS and the first prefix, that the second AS and the first prefix have the second valid relationship.

In a possible implementation, the apparatus 600 further includes: a fourth determining unit, configured to determine, based on matching between a fifth correspondence and a sixth correspondence, that the second AS and the first prefix have the second valid relationship, where the fifth correspondence includes the identifier of the second AS, the first prefix, and a relationship between the second AS and the first prefix, and the sixth correspondence includes the identifier of the second AS, the first prefix, and a relationship between the second AS and the first prefix.

In a possible implementation, the fifth correspondence is obtained by searching an ROA database for a prefix based on the identifier of the second AS, and the sixth correspondence is obtained by searching an IRR database for a prefix based on the identifier of the second AS; or
the fifth correspondence is obtained by searching an ROA database for a belonging AS based on the first prefix, and the sixth correspondence is obtained by searching an IRR database for a belonging AS based on the first prefix.

In a possible implementation, the first correspondence includes a customer cone of the first AS, and the customer cone of the first AS includes the first AS and the second AS.

In a possible implementation, the apparatus 600 is performed by a network device, the network device includes the interface, the network device is located at an edge of a third AS, and the third AS is located upstream of the first AS.

In a possible implementation, the apparatus 600 is disposed in a control device, and the apparatus 600 further includes:
a sending unit, configured to send a protocol packet to a network device, where the network device includes the interface, the network device is located at an edge of a third AS, the third AS is located upstream of the first AS, and the protocol packet includes the source address validation entry.

In a possible implementation, the protocol packet is a border gateway protocol BGP packet or a path computation element protocol PCEP packet.

In a possible implementation, the protocol packet is a border gateway protocol flow specification BGP FS packet, the BGP FS packet includes a network layer reachability information NLRI field and an extended community attribute field, the NLRI field includes the first prefix, and the extended community attribute field includes the identifier of the interface.

The apparatus embodiment described in FIG. 14 is merely an example. For example, division into the units is merely logical function division and may be other division in actual implementation. For example, a plurality of units or components may be combined or integrated into another system, or some features may be ignored or not performed. Functional units in embodiments of this application may be integrated into one processing unit, each of the units may exist alone physically, or two or more units are integrated into one unit.

All or part of the units in the apparatus 600 for obtaining the source address validation entry are implemented by software, hardware, firmware, or any combination thereof.

With reference to the device 600 described in the following, the following describes some possible implementations of the functional units in the apparatus 600 for obtaining the source address validation entry by using hardware or software.

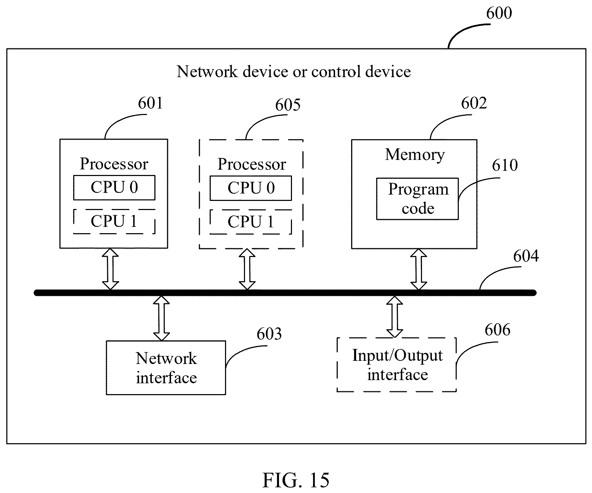

If software is used for implementation, for example, the first obtaining unit 601 and the second obtaining unit 602 are implemented by software functional units generated after at least one processor 601 in FIG. 15 reads program code stored in the memory 602.

The foregoing units in FIG. 14 are separately implemented by different hardware in a network device or a control device. For example, the first obtaining unit 601 is implemented by a part of processing resources (for example, one core or two cores in a multi-core processor) in at least one processor 601 in FIG. 15, and the second obtaining unit 602 is implemented by a part of processing resources (for example, another core in the multi-core processor) in the at least one processor 601 in FIG. 15, or is implemented by a programmable device such as a field programmable gate array (field-programmable gate array, FPGA) or a coprocessor. The receiving unit and the sending unit are implemented by a network interface 603 in FIG. 15.

FIG. 15 is a diagram of a structure of a device 600 according to an embodiment of this application. The device 600 may be a network device, or may be a control device.

Optionally, with reference to the application scenario shown in FIG. 1, the device 600 shown in FIG. 15 is the router R2 located at the edge of the AS 4 in FIG. 1. Optionally, with reference to FIG. 3, the device 600 shown in FIG. 15 is configured to perform the method procedure shown in FIG. 3. Optionally, with reference to FIG. 4, the device 600 shown in FIG. 15 is configured to perform S32 to S36 in the method shown in FIG. 4. Optionally, with reference to FIG. 13, the device 600 shown in FIG. 15 is configured to perform the method procedure shown in FIG. 13.

The device 600 includes at least one processor 601, a memory 602, and at least one network interface 603. The processor 601 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 601 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof. The memory 602 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store desired program code in a form of instructions or a data structure and that can be accessed by a computer, but is not limited thereto. Optionally, the memory 602 exists independently, and is connected to the processor 601 by the internal connection 604. Alternatively, the memory 602 and the processor 601 may optionally be integrated together. The network interface 603 is any apparatus of a transceiver type, and is configured to communicate with another device or a communication network. The network interface 603 includes, for example, at least one of a wired network interface or a wireless network interface. The wired network interface is, for example, an ethernet interface. The ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 601 includes one or more CPUs, such as a CPU 0 and a CPU 1 shown in FIG. 15.

In some embodiments, the device 600 optionally includes a plurality of processors, such as the processor 601 and a processor 605 shown in FIG. 15. Each of these processors is, for example, a single-core processor (single-CPU) or a multi-core processor (multi-CPU). The processor herein is optionally one or more devices, circuits, and/or processing cores configured to process data (for example, computer program instructions).

In some embodiments, the device 600 further includes an internal connection 604. The processor 601, the memory 602, and the at least one network interface 603 are connected by the internal connection 604. The internal connection 604 includes a channel for transmitting information between the foregoing components. Optionally, the internal connection 604 is a board or a bus. Optionally, the internal connection 604 is classified into an address bus, a data bus, a control bus, and the like.

In some embodiments, the device 600 further includes an input/output interface 606. The input/output interface 606 is connected to the internal connection 604.

Optionally, the processor 601 reads program code stored in the memory 602 to implement the method in the foregoing embodiments, or the processor 601 uses internally stored program code to implement the method in the foregoing embodiments. When the processor 601 reads the program code stored in the memory 602 to implement the method in the foregoing embodiment, the memory 602 stores program code 610 that implements the method provided in embodiments of this application.

For more details of implementing the foregoing functions by the processor 601, refer to the descriptions in the foregoing method embodiments. Details are not described herein again.

Embodiments in this specification are described in a progressive manner. For same or similar parts in embodiments, refer to each other. Each embodiment focuses on a difference from other embodiments.

That A refers to B means that A is the same as B or that A is a simple variant of B.

In the specification and claims in embodiments of this application, the terms "first", "second", and the like are for distinguishing between different objects, but are not intended to describe a particular order of the objects, and cannot be understood as an indication or implication of relative importance. For example, the first protocol packet and the second protocol packet are used to distinguish between different protocol packets, but are not used to describe a specific sequence of protocol packets. It cannot be considered that the first protocol packet is more important than the second protocol packet.

Information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, the ASPA data, the ROA data, and the IRR data in this application are all obtained with sufficient authorization.

In embodiments of this application, unless otherwise specified, "at least one" means one or more, and "a plurality of" means two or more. For example, a plurality of databases are two or more databases.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of procedures or functions described in embodiments of this application are executed. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A method for obtaining a source address validation entry, wherein the method comprises:
obtaining a first prefix of a second AS based on an identifier of a first autonomous system AS and a first correspondence, wherein the first correspondence comprises the identifier of the first AS, an identifier of the second AS, and a first valid relationship, and the second AS is located downstream of the first AS; and
obtaining the source address validation entry based on an interface communicating with the first AS and the first prefix, wherein the source address validation entry comprises the first prefix and an identifier of the interface.

2. The method according to claim 1, wherein the first valid relationship is that a region corresponding to a relationship between two ASs that are upstream and downstream to each other matches a region corresponding to a customer cone, and the customer cone comprises the two ASs that are upstream and downstream to each other; or
the first valid relationship is a relationship between ASs on which validation performed based on a plurality of databases succeeds, and the plurality of databases are different in at least one of the following: a registration quantity, deployment time, a digital signature, and certificate authentication.

3. The method according to claim 1, wherein before obtaining the first prefix of the second AS based on the identifier of the first AS and the first correspondence, the method further comprises:
determining, based on matching between a region corresponding to the first AS and a valid region corresponding to a relationship between the first AS and the second AS, that the first AS and the second AS have the first valid relationship.

4. The method according to claim 1, wherein before obtaining the first prefix of the second AS based on the identifier of the first AS and the first correspondence, the method further comprises:
determining, based on matching between a second correspondence and a third correspondence, that the first AS and the second AS have the first valid relationship, wherein the second correspondence comprises the identifier of the first AS, the identifier of the second AS, and a relationship between the first AS and the second AS, and the third correspondence comprises the identifier of the first AS, the identifier of the second AS, and a relationship between the first AS and the second AS.

5. The method according to claim 4, wherein the second correspondence is obtained by searching an autonomous system provider authorization ASPA database for a downstream AS based on the identifier of the first AS, and the third correspondence is obtained by searching an internet routing registry IRR database for a downstream AS based on the identifier of the first AS; or
the second correspondence is obtained by searching an autonomous system provider authorization ASPA database for an upstream AS based on the identifier of the second AS, and the third correspondence is obtained by searching an internet routing registry IRR database for an upstream AS based on the identifier of the second AS.

6. The method according to any one of claims 1 to 5, wherein obtaining the first prefix of the second AS based on the identifier of the first AS and the first correspondence comprises:
obtaining the identifier of the second AS based on the identifier of the first AS and the first correspondence; and
obtaining the first prefix based on the identifier of the second AS and a fourth correspondence, wherein the fourth correspondence comprises the identifier of the second AS, the first prefix, and a second valid relationship.

7. The method according to claim 6, wherein the second valid relationship is that a region corresponding to a relationship between a prefix and an AS to which the prefix belongs matches a region corresponding to a customer cone, and the customer cone comprises the AS to which the prefix belongs; or
the second valid relationship is a relationship between ASs on which validation performed based on a plurality of databases succeeds, and the plurality of databases are different in at least one of the following: a registration quantity, deployment time, a digital signature, and certificate authentication.

8. The method according to claim 6, wherein before obtaining the first prefix based on the identifier of the second AS and the fourth correspondence, the method further comprises:
determining, based on matching between a region corresponding to the second AS and a valid region corresponding to a relationship between the second AS and the first prefix, that the second AS and the first prefix have the second valid relationship.

9. The method according to claim 4, wherein before obtaining the first prefix based on the identifier of the second AS and the fourth correspondence, the method further comprises:
determining, based on matching between a fifth correspondence and a sixth correspondence, that the second AS and the first prefix have the second valid relationship, wherein the fifth correspondence comprises the identifier of the second AS, the first prefix, and a relationship between the second AS and the first prefix, and the sixth correspondence comprises the identifier of the second AS, the first prefix, and a relationship between the second AS and the first prefix.

10. The method according to claim 1, wherein the fifth correspondence is obtained by searching a route origin authorization ROA database for a prefix based on the identifier of the second AS, and the sixth correspondence is obtained by searching an IRR database for a prefix based on the identifier of the second AS; or
the fifth correspondence is obtained by searching an ROA database for a belonging AS based on the first prefix, and the sixth correspondence is obtained by searching an IRR database for a belonging AS based on the first prefix.

11. The method according to claim 1, wherein the first correspondence comprises a customer cone of the first AS, and the customer cone of the first AS comprises the first AS and the second AS.

12. The method according to claim 1, wherein the method is performed by a network device, the network device comprises the interface, the network device is located at an edge of a third AS, and the third AS is located upstream of the first AS.

13. The method according to claim 1, wherein the method is performed by a control device, and after obtaining the source address validation entry based on the interface communicating with the first AS and the first prefix, the method further comprises:
sending, by the control device, the protocol packet to a network device, wherein the network device comprises the interface, the network device is located at an edge of a third AS, the third AS is located upstream of the first AS, and the protocol packet comprises the source address validation entry.

14. The method according to claim 13, wherein the protocol packet is a border gateway protocol BGP packet or a path computation element protocol PCEP packet.

15. The method according to claim 13 or 14, wherein the protocol packet is a border gateway protocol flow specification BGP FS packet, the BGP FS packet comprises a network layer reachability information NLRI field and an extended community attribute field, the NLRI field comprises the first prefix, and the extended community attribute field comprises the identifier of the interface.

16. An apparatus for obtaining a source address validation entry, wherein the apparatus comprises:
a first obtaining unit, configured to obtain a first prefix of a second AS based on an identifier of a first autonomous system AS and a first correspondence, wherein the first correspondence comprises the identifier of the first AS, an identifier of the second AS, and a first valid relationship, and the second AS is located downstream of the first AS; and
a second obtaining unit, configured to obtain the source address validation entry based on an interface communicating with the first AS and the first prefix, wherein the source address validation entry comprises the first prefix and an identifier of the interface.

17. The apparatus according to claim 16, wherein the first valid relationship is that a region corresponding to a relationship between two ASs that are upstream and downstream to each other matches a region corresponding to a customer cone, and the customer cone comprises the two ASs that are upstream and downstream to each other; or
the first valid relationship is a relationship between ASs on which validation performed based on a plurality of databases succeeds, and the plurality of databases are different in at least one of the following: a registration quantity, deployment time, a digital signature, and certificate authentication.

18. The apparatus according to claim 16, wherein the apparatus further comprises:
a first determining unit, configured to determine, based on matching between a region corresponding to the first AS and a valid region corresponding to a relationship between the first AS and the second AS, that the first AS and the second AS have the first valid relationship.

19. The apparatus according to claim 16, wherein the apparatus further comprises:
a second determining unit, configured to determine, based on matching between a second correspondence and a third correspondence, that the first AS and the second AS have the first valid relationship, wherein the second correspondence comprises the identifier of the first AS, the identifier of the second AS, and a relationship between the first AS and the second AS, and the third correspondence comprises the identifier of the first AS, the identifier of the second AS, and a relationship between the first AS and the second AS.

20. The apparatus according to claim 19, wherein the second correspondence is obtained by searching an autonomous system provider authorization ASPA database for a downstream AS based on the identifier of the first AS, and the third correspondence is obtained by searching an internet routing registry IRR database for a downstream AS based on the identifier of the first AS; or
the second correspondence is obtained by searching an autonomous system provider authorization ASPA database for an upstream AS based on the identifier of the second AS, and the third correspondence is obtained by searching an internet routing registry IRR database for an upstream AS based on the identifier of the second AS.

21. The apparatus according to any one of claims 16 to 20, wherein the first obtaining unit is configured to: obtain the identifier of the second AS based on the identifier of the first AS and the first correspondence; and obtain the first prefix based on the identifier of the second AS and a fourth correspondence, wherein the fourth correspondence comprises the identifier of the second AS, the first prefix, and a second valid relationship.

22. The apparatus according to claim 21, wherein the second valid relationship is that a region corresponding to a relationship between a prefix and an AS to which the prefix belongs matches a region corresponding to a customer cone, and the customer cone comprises the AS to which the prefix belongs; or
the second valid relationship is a relationship between ASs on which validation performed based on a plurality of databases succeeds, and the plurality of databases are different in at least one of the following: a registration quantity, deployment time, a digital signature, and certificate authentication.

23. The apparatus according to claim 21, wherein the apparatus further comprises:
a third determining unit, configured to determine, based on matching between a region corresponding to the second AS and a valid region corresponding to a relationship between the second AS and the first prefix, that the second AS and the first prefix have the second valid relationship.

24. The apparatus according to claim 19, wherein the apparatus further comprises:
a fourth determining unit, configured to determine, based on matching between a fifth correspondence and a sixth correspondence, that the second AS and the first prefix have the second valid relationship, wherein the fifth correspondence comprises the identifier of the second AS, the first prefix, and a relationship between the second AS and the first prefix, and the sixth correspondence comprises the identifier of the second AS, the first prefix, and a relationship between the second AS and the first prefix.

25. The apparatus according to claim 16, wherein the fifth correspondence is obtained by searching a route origin authorization ROA database for a prefix based on the identifier of the second AS, and the sixth correspondence is obtained by searching an IRR database for a prefix based on the identifier of the second AS; or
the fifth correspondence is obtained by searching an ROA database for a belonging AS based on the first prefix, and the sixth correspondence is obtained by searching an IRR database for a belonging AS based on the first prefix.

26. The apparatus according to claim 16, wherein the first correspondence comprises a customer cone of the first AS, and the customer cone of the first AS comprises the first AS and the second AS.

27. The apparatus according to claim 16, wherein the apparatus is performed by a network device, the network device comprises the interface, the network device is located at an edge of a third AS, and the third AS is located upstream of the first AS.

28. The apparatus according to claim 16, wherein the apparatus is disposed in a control device, and the apparatus further comprises:
a sending unit, configured to send the protocol packet to a network device, wherein the network device comprises the interface, the network device is located at an edge of a third AS, the third AS is located upstream of the first AS, and the protocol packet comprises the source address validation entry.

29. The apparatus according to claim 28, wherein the protocol packet is a border gateway protocol BGP packet or a path computation element protocol PCEP packet.

30. The apparatus according to claim 28 or 29, wherein the protocol packet is a border gateway protocol flow specification BGP FS packet, the BGP FS packet comprises a network layer reachability information NLRI field and an extended community attribute field, the NLRI field comprises the first prefix, and the extended community attribute field comprises the identifier of the interface.
